# EUROPEAN PATENT APPLICATION

(11) **EP 4 564 747 A1**
(43) Date of publication of application: **04.06.2025**
(21) Application number: 23851824.5
(22) Date of filing: 08.08.2023
(51) Int. Cl.: H04L 12/14

(54) **COMMUNICATION METHOD AND APPARATUS**

(30) Priority: 11.08.2022 CN 202210964105
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN); SCHRAMM, Mirko, Shenzhen, Guangdong 518129 (CN)
(74) Representative: Körber, Martin Hans
(86) International application number: PCT/CN2023/111723
(87) International publication number: WO 2024/032603

(57) **Abstract**

A communication method and apparatus are provided, to shorten a QNC notification path, so that an AF responds quickly. A session management function network element receives, from a policy control function network element, a PCC rule including a correspondence between a QoS parameter and a QoS requirement indication, and sends, to an access network device according to the PCC rule, first information including a correspondence between a QoS profile and the QoS requirement indication. The access network device determines a first QoS requirement indication based on the correspondence between the QoS profile and the QoS requirement indication, and sends the first QoS requirement indication to a user plane function network element, where the first QoS requirement indication is a QoS requirement indication corresponding to a QoS profile that can be met by a current resource of the access network device. In this way, the user plane function network element may send, to an application function network element, the QoS requirement indication that can be identified by the application function network element, so that a QNC notification path can be short, and the application function network element responds quickly, thereby ensuring user experience.

## Description

### CROSS-REFERENCE TO RELATED APPLICATIONS

This application claims priority to Chinese Patent Application No. 202210964105.3, filed with the China National Intellectual Property Administration on August 11, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

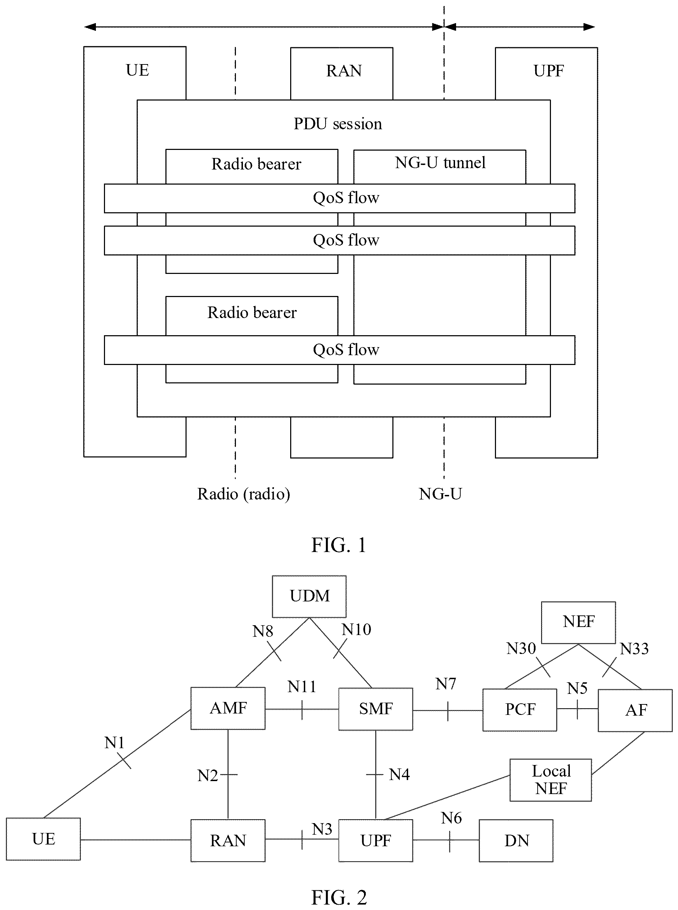

In a 5G system, a 5G QoS model based on a quality of service flow (quality of service flow, QoS flow) is proposed to ensure end-to-end quality of service of a service, as shown in FIG. 1. The 5G QoS model supports a guaranteed bit rate (guaranteed bit rate, GBR) QoS flow (GBR QoS flow) and a non-guaranteed bit rate QoS flow (Non-GBR QoS flow). Same transmission processing (for example, scheduling or admission threshold) is performed on data packets controlled via a same QoS flow.

User equipment (user equipment, UE) may establish one or more protocol data unit (protocol data unit, PDU) sessions with a 5G network. One or more QoS flows may be established in each PDU session. Each QoS flow is identified by a QoS flow identifier (QoS flow identifier, QFI). A QFI uniquely identifies a QoS flow in a session.

Whether a QoS flow is a GBR QoS flow or a non-GBR QoS flow is determined based on a corresponding QoS profile (QoS profile).

A QoS profile corresponding to a GBR QoS flow includes the following QoS parameters: a 5G QoS identifier (5G QoS identifier, 5QI), an allocation and retention priority (allocation and retention priority, ARP), a guaranteed flow bit rate (guaranteed flow bit rate, GFBR), and/or a maximum flow bit rate (maximum flow bit rate, MFBR). The QoS profile further includes QoS notification control (QoS notification control, QNC). Based on whether the QoS profile includes QNC, GBR QoS flows include a GBR QoS flow that needs QNC and a GBR QoS flow that does not need QNC. For the GBR QoS flow that needs QNC, when an access network (radio access network, RAN) device detects that a corresponding QoS flow resource cannot be met, the RAN notifies a session management function (session management function, SMF) network element of the event, the SMF notifies a policy control function (policy control function, PCF) network element, and then the PCF notifies an application function (application function, AF) network element, so that the AF performs transmission adjustment.

However, currently, the foregoing QNC notification path is long, and the AF may not be able to respond in a timely manner, resulting in poor user experience.

### SUMMARY

This application provides a communication method and apparatus, to shorten a QNC notification path, so that an AF responds quickly.

According to a first aspect, this application provides a communication method. The method may be performed by an access network device, or may be performed by a component (for example, a processor, a chip, a chip system, or a functional module) of the access network device. For example, the method is performed by the access network device. The method may include: The access network device receives, from a session management function network element, first information including a correspondence between a QoS profile and a QoS requirement indication, and then the access network device determines a first QoS requirement indication based on the correspondence between the QoS profile and the QoS requirement indication, and sends the first QoS requirement indication to a user plane function network element, where the first QoS requirement indication is a QoS requirement indication corresponding to a QoS profile that can be met by a current resource of the access network device.

According to the foregoing method, QNC may be exposed to the application function network element via a user plane, that is, a QoS requirement indication that can be identified by the application function network element is sent to the application function network element via the user plane function network element, so that a QNC notification path can be short, and the application function network element can respond quickly, thereby ensuring user experience. In addition, in the method, the user plane function network element only needs to forward the QoS requirement indication to the application function network element, and does not need to perform much processing, so that complexity is low.

In a possible design, the QoS requirement indication is from the application function network element. In this way, the access network device may send, to the application function network element, a QoS requirement indication that can be identified by the application function network element.

According to a second aspect, this application provides a communication method. The method may be performed by a session management function network element, or may be performed by a component (for example, a processor, a chip, a chip system, or a functional module) of the session management function network element. For example, the method is performed by the session management function network element. The method may include: The session management function network element receives a policy and charging control (policy and charging control, PCC) rule from a policy control function network element, where the PCC rule includes a correspondence between a QoS parameter and a QoS requirement indication; and further the session management function network element sends first information to an access network device according to the PCC rule, where the first information may include a correspondence between a QoS profile and the QoS requirement indication, where the QoS parameter corresponds to the QoS profile.

According to the foregoing method, the access network device can subsequently determine, based on the correspondence between the QoS profile and the QoS requirement indication, a QoS requirement indication corresponding to a profile that can be met by a current resource, and expose QNC to an application function network element via a user plane, that is, send, via a user plane function network element, a QoS requirement indication that can be identified by the application function network element, so that a QNC notification path can be short, and the application function network element can respond quickly, thereby ensuring user experience. In addition, in the method, the user plane function network element does not need to perform much processing, so that complexity is low.

In a possible design, the PCC rule may further include a network congestion notification indication; and the session management function network element may further determine, based on the network congestion notification indication, to send the QoS requirement indication to the access network device. In this way, the session management function network element may be triggered, by using the network congestion notification indication, to send the QoS requirement indication to the access network device, thereby reducing signaling overheads.

In a possible design, the PCC rule may further include first indication information, and the first indication information indicates the session management function network element to send the QoS requirement indication to the access network device. In this way, the session management function network element may be directly instructed to send the QoS requirement indication to the access network device, so that complexity of the session management function network element is low.

In a possible design, the QoS requirement indication is from the application function network element. In this way, the access network device may subsequently report, to the application function network element, a QoS requirement indication that can be identified by the application function network element.

According to a third aspect, this application provides a communication method. The method may be performed by a session management function network element, or may be performed by a component (for example, a processor, a chip, a chip system, or a functional module) of the session management function network element. For example, the method is performed by a session management function network element. The method may include: After receiving, from a policy control function network element, a PCC rule including a QoS parameter, the session management function network element determines a QoS profile corresponding to the QoS parameter; and then the session management function network element sends, to an application function network element, a QoS profile indication corresponding to the QoS profile, where the QoS profile indication is used by the application function network element to determine a corresponding QoS requirement.

According to the foregoing method, after determining the QoS profile, the session management function network element exposes the QoS profile indication to the application function network element, so that when the session management function network element subsequently exposes the QoS profile indication to the application function network element via a user plane function network element, the application function network element may determine a QoS requirement that can be met by a current resource of an access network device. QNC is exposed via a user plane, so that a QNC notification path can be short, and the application function network element can respond quickly, thereby ensuring user experience. In addition, change of logic of the UPF network element can be avoided, thereby reducing complexity of the network element.

In a possible design, the PCC rule may further include first indication information, and the first indication information indicates the session management function network element to send the QoS profile indication corresponding to the QoS profile to the application function network element. In this way, the session management function network element may be directly indicated to send the QoS profile indication corresponding to the QoS profile to the application function network element, so that complexity of the session management function network element is low.

In a possible design, the PCC rule may further include a network congestion notification indication; and the session management function network element may further determine, based on the network congestion notification indication, to send the QoS profile indication corresponding to the QoS profile to the application function network element. In this way, the session management function network element may be triggered, by using the network congestion notification indication, to send the QoS profile indication corresponding to the QoS profile to the application function network element, thereby reducing signaling overheads.

According to a fourth aspect, this application provides a communication method. The method may be performed by an application function network element, or may be performed by a component (for example, a processor, a chip, a chip system, or a functional module) of the application function network element. For example, the method is performed by the application function network element. The method may include: The application function network element receives, from a session management function network element, a QoS profile indication corresponding to a QoS profile, where the QoS profile indication is used by the application function network element to determine a corresponding QoS requirement; and then the application function network element stores a correspondence between the QoS profile indication and the QoS requirement. Subsequently, after the application function network element receives a first QoS profile indication from a user plane function network element, the application function network element may determine, based on the correspondence between the QoS profile indication and the QoS requirement, a first QoS requirement corresponding to the first QoS profile indication.

In the foregoing method, when QNC is exposed via a user plane, after determining the QoS profile, the session management function network element exposes the QoS profile indication to the application function network element, and then the application function network element stores a correspondence between the QoS profile indication and a QoS requirement indication. When congestion occurs in an access network device, the access network device determines a QoS profile indication corresponding to a QoS profile that can be met by a current resource, and exposes the QoS profile indication to the application function network element via the user plane function network element, so that the application function network element determines, based on the correspondence, a QoS requirement that can be met by the current resource of the access network device. In this way, a QNC notification path can be short, and the application function network element can respond quickly, thereby ensuring user experience. In addition, change of logic of the UPF network element can be avoided, thereby reducing complexity of the network element.

According to a fifth aspect, this application provides a communication method. The method may be performed by a policy control function network element, or may be performed by a component (for example, a processor, a chip, a chip system, or a functional module) of the policy control function network element. For example, the method is performed by the policy control function network element. The method may include: After receiving a QoS requirement from an application function network element, the policy control function network element determines a QoS parameter corresponding to the QoS requirement; and then the policy control function network element sends, to the application function network element, a QoS parameter indication corresponding to the QoS parameter, where the QoS parameter indication is used by the application function network element to determine the corresponding QoS requirement.

According to the foregoing method, after determining the QoS parameter, the policy control function network element exposes the QoS parameter indication corresponding to the QoS parameter to the application function network element, so that when QNC is subsequently exposed via a user plane, the application function network element may further determine a corresponding QoS requirement that can be met by a current resource of an access network device. In this way, a QNC notification path can be short, and the application function network element can respond quickly, thereby ensuring user experience.

In a possible design, the policy control function network element sends first indication information to a session management function network element, where the first indication information indicates the session management function network element to send the QoS parameter indication to an access network device. In this way, the session management function network element can directly determine that the QoS parameter indication needs to be sent to the access network device, so that complexity of the session management function network element is low.

In a possible design, the policy control function network element may receive a network congestion notification indication from the application function network element; and the policy control function network element may further determine, based on the network congestion notification indication, to send the QoS parameter indication corresponding to the QoS parameter to the application function network element. In this way, the policy control function network element may be triggered, by using the existing network congestion notification indication, to send the QoS parameter indication corresponding to the QoS parameter to the application function network element, thereby reducing signaling overheads.

In a possible design, the policy control function network element receives second indication information from the application function network element, where the second indication information indicates the policy control function network element to send the QoS parameter indication corresponding to the QoS parameter to the application function network element. In this way, the policy control function network element may be directly indicated to send the QoS parameter indication corresponding to the QoS parameter to the application function network element, so that complexity is low.

In a possible design, the policy control function network element sends the QoS parameter indication to a session management function network element. In this way, the session management function network element may subsequently send the QoS parameter indication to an access network device, so that when congestion occurs in the access network device subsequently, the access network device reports a QoS parameter indication corresponding to a profile that can be met by a current resource, for identification by the application function network element.

According to a sixth aspect, this application provides a communication method. The method may be performed by an application function network element, or may be performed by a component (for example, a processor, a chip, a chip system, or a functional module) of the application function network element. For example, the method is performed by the application function network element. The method may include: The application function network element receives, from a policy control function network element, a QoS parameter indication corresponding to a QoS parameter, where the QoS parameter indication is used by the application function network element to determine a corresponding QoS requirement; and the application function network element stores a correspondence between the QoS parameter indication and the QoS requirement. Subsequently, after the application function network element receives a first QoS parameter indication from a user plane function network element, the application function network element may determine, based on the correspondence between the QoS parameter indication and the QoS requirement, a first QoS requirement corresponding to the first QoS parameter indication.

According to the foregoing method, the policy control function network element exposes, to the application function network element, the QoS parameter indication corresponding to the QoS parameter, and then the application function network element stores the correspondence between the QoS parameter indication and the QoS requirement. Further, when congestion occurs in an access network device, the access network device determines a QoS parameter indication corresponding to a QoS profile that can be met by a current resource, and exposes the QoS parameter indication to the application function network element via the user plane function network element, so that the application function network element determines, based on the correspondence, a QoS requirement that can be met by the current resource of the access network device. In this way, a QNC notification path can be short, and the application function network element can respond quickly, thereby ensuring user experience. In addition, change of logic of the UPF network element can be avoided, thereby reducing complexity of the network element.

In a possible design, the application function network element sends second indication information to the policy control function network element, where the second indication information indicates the policy control function network element to send the QoS parameter indication corresponding to the QoS parameter to the application function network element. In this way, the policy control function network element may be directly indicated to expose the QoS parameter indication corresponding to the QoS parameter to the application function network element, so that complexity is low.

According to a seventh aspect, this application provides a communication method. The method may be performed by a session management function network element, or may be performed by a component (for example, a processor, a chip, a chip system, or a functional module) of the session management function network element. For example, the method is performed by the session management function network element. The method may include: After receiving a QoS parameter indication from a policy control function network element, the session management function network element sends the QoS parameter indication to an access network device, where the QoS parameter indication is used by the access network device to determine a QoS parameter indication corresponding to a QoS profile.

According to the foregoing method, the policy control function network element sends the QoS parameter indication to the session management function network element, and then the session management function network element sends the QoS parameter indication to the access network device. Further, when congestion occurs in the access network device, the access network device determines a QoS parameter indication corresponding to a QoS profile that can be met by a current resource, and exposes the QoS parameter indication to an application function network element via a user plane function network element, so that the application function network element further determines, based on the QoS parameter indication, a QoS requirement that can be met by the current resource of the access network device. In this way, a QNC notification path can be short, and the application function network element can respond quickly, thereby ensuring user experience. In addition, change of logic of the UPF network element can be avoided, thereby reducing complexity of the network element.

In a possible design, the session management function network element receives first indication information from the policy control function network element, where the first indication information may indicate the session management function network element to send the QoS parameter indication to the access network device. In this way, the session management function network element is directly indicated to send the QoS parameter indication to the access network device, so that complexity is low.

In a possible design, the session management function network element receives a network congestion notification indication from the policy control function network element, and the session management function network element may further determine, based on the network congestion notification indication, to send the QoS parameter indication to the access network device. In this way, the session management function network element may be triggered, by using the network congestion notification indication, to send the QoS parameter indication to the access network device, thereby reducing signaling overheads.

According to an eighth aspect, this application provides a communication method. The method may be performed by an access network device, or may be performed by a component (such as a processor, a chip, a chip system, or a functional module) of the access network device. For example, the method is performed by the access network device. The method may include: The access network device receives a QoS parameter indication from a session management function network element, where the QoS parameter indication is used by the access network device to determine a QoS parameter indication corresponding to a QoS profile; the access network device may further determine, based on the QoS parameter indication, a first QoS parameter indication corresponding to a first QoS profile; and finally, the access network device may send the first QoS parameter indication to an application function network element via a user plane function network element. The first QoS profile is a profile that can be met by a current resource of the access network device.

According to the foregoing method, when congestion occurs in the access network device, the access network device determines a QoS parameter indication corresponding to the QoS profile that can be met by the current resource, and exposes the QoS parameter indication to the application function network element via the user plane function network element. In this way, a QNC notification path can be short, and the application function network element can respond quickly, thereby ensuring user experience. In addition, change of logic of the UPF network element can be avoided, thereby reducing complexity of the network element.

According to a ninth aspect, this application provides a communication method. The method may be performed by a session management function network element, or may be performed by a component (for example, a processor, a chip, a chip system, or a functional module) of the session management function network element. For example, the method is performed by the session management function network element. The method may include: The session management function network element sends first indication information to a user plane function network element, where the first indication information indicates the user plane function network element to report congestion information corresponding to a first service flow to the session management function network element; then the session management function network element receives, from the user plane function network element, first congestion information corresponding to the first service flow, where the first congestion information includes a first QoS profile indication; and the session management function network element may further determine, based on a correspondence between a QoS profile indication and a QoS requirement indication, a first QoS requirement indication corresponding to the first QoS profile indication, and send the first QoS requirement indication to an application function network element.

According to the foregoing communication method, when QNC is exposed via a user plane, the session management function network element indicates the user plane function network element to report a congestion status of an access network device, and then the session management function network element converts congestion of the access network device into a QoS requirement that can be understood by the application function network element. In this way, a QNC notification path can be short, and the application function network element can respond quickly, thereby ensuring user experience. In addition, change of logic of the UPF network element can be avoided, thereby reducing complexity of the network element.

In a possible design, a method in which the session management function network element sends the first indication information to the user plane function network element may be as follows: The session management function network element sends the first indication information to the user plane function network element based on determining that the first service flow needs direct network congestion exposure and corresponds to a guaranteed bit rate QoS flow. In this way, the session management function network element may send the first indication information to the user plane function network element when determining that a condition is met.

In a possible design, the session management function network element may receive a network congestion notification indication, and may further determine, based on the network congestion notification indication, that the first service flow needs direct network congestion exposure and corresponds to a guaranteed bit rate QoS flow. In this way, interaction between the user plane function network element and the session management function network element can be reduced.

In a possible design, the session management function network element receives second indication information from a policy control function network element, where the second indication information indicates the session management function network element to send the first indication information to the user plane function network element. In this way, the session management function network element is directly indicated to send the first indication information to the user plane function network element, so that complexity is low.

In a possible design, the QoS requirement indication is from the application function network element. In this way, the session management function network element can report, to the application function network element, a QoS requirement indication that can be identified by the application function network element.

According to a tenth aspect, this application further provides a communication apparatus. The communication apparatus may be an access network device, and the communication apparatus has a function of implementing the method in the first aspect or the possible designs of the first aspect, or the method in the eighth aspect or the possible designs of the eighth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform a corresponding function in the first aspect or the possible designs of the first aspect, or the eighth aspect or the possible designs of the eighth aspect. For details, refer to detailed descriptions in the method examples. The details are not described herein.

In a possible design, a structure of the communication apparatus includes a transceiver and a processor, and optionally further includes a memory. The transceiver is configured to: receive and send data, a message, information, or the like, and is configured to: communicate and interact with another device in a communication system. The processor is configured to support the communication apparatus in performing a corresponding function in the first aspect or the possible designs of the first aspect, or the eighth aspect or the possible designs of the eighth aspect. The memory is coupled to the processor, and the memory stores program instructions and data that are necessary for the communication apparatus.

According to an eleventh aspect, this application further provides a communication apparatus. The communication apparatus may be a session management function network element. The communication apparatus has a function of implementing the method in the second aspect or the possible designs of the second aspect, the third aspect or the possible designs of the third aspect, the seventh aspect or the possible designs of the seventh aspect, or the ninth aspect or the possible designs of the ninth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform a corresponding function in the second aspect or the possible designs of the second aspect, the third aspect or the possible designs of the third aspect, the seventh aspect or the possible designs of the seventh aspect, or the ninth aspect or the possible designs of the ninth aspect. For details, refer to detailed descriptions in the method examples. The details are not described herein.

In a possible design, a structure of the communication apparatus includes a transceiver and a processor, and optionally further includes a memory. The transceiver is configured to: receive and send data, a message, information, or the like, and is configured to: communicate and interact with another device in a communication system. The processor is configured to support the communication apparatus in performing a corresponding function in the second aspect or the possible designs of the second aspect, the third aspect or the possible designs of the third aspect, the seventh aspect or the possible designs of the seventh aspect, or the ninth aspect or the possible designs of the ninth aspect. The memory is coupled to the processor, and the memory stores program instructions and data that are necessary for the communication apparatus.

According to a twelfth aspect, this application further provides a communication apparatus. The communication apparatus may be an application function network element, and the communication apparatus has a function of implementing the method in the fourth aspect or the possible designs of the fourth aspect, or the method in the sixth aspect or the possible designs of the sixth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform a corresponding function in the fourth aspect or the possible designs of the fourth aspect, or the sixth aspect or the possible designs of the sixth aspect. For details, refer to detailed descriptions in the method examples. The details are not described herein.

In a possible design, a structure of the communication apparatus includes a transceiver and a processor, and optionally further includes a memory. The transceiver is configured to: receive and send data, a message, information, or the like, and is configured to: communicate and interact with another device in a communication system. The processor is configured to support the communication apparatus in performing a corresponding function in the fourth aspect or the possible designs of the fourth aspect, or the sixth aspect or the possible designs of the sixth aspect. The memory is coupled to the processor, and the memory stores program instructions and data that are necessary for the communication apparatus.

According to a thirteenth aspect, this application further provides a communication apparatus. The communication apparatus may be a policy control function network element, and the communication apparatus has a function of implementing the method in the fifth aspect or the possible designs of the fifth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform a corresponding function in the fifth aspect or the possible designs of the fifth aspect. For details, refer to detailed descriptions in the method examples. The details are not described herein.

In a possible design, a structure of the communication apparatus includes a transceiver and a processor, and optionally further includes a memory. The transceiver is configured to: receive and send data, a message, information, or the like, and is configured to: communicate and interact with another device in a communication system. The processor is configured to support the communication apparatus in performing a corresponding function in the fifth aspect or the possible designs of the fifth aspect. The memory is coupled to the processor, and the memory stores program instructions and data that are necessary for the communication apparatus.

According to a fourteenth aspect, an embodiment of this application provides a communication system. The communication system may include the foregoing access network device, session management function network element, policy control function network element, application function network element, user plane function network element, and the like.

According to a fifteenth aspect, an embodiment of this application provides a computer-readable storage medium. The computer-readable storage medium stores program instructions, and when the program instructions are run on a computer, the computer is enabled to perform the method in any one of the first aspect and the possible designs of the first aspect, the method in any one of the second aspect and the possible designs of the second aspect, the method in any one of the third aspect and the possible designs of the third aspect, the method in any one of the fourth aspect and the possible designs of the fourth aspect, the method in any one of the fifth aspect and the possible designs of the fifth aspect, the method in any one of the sixth aspect and the possible designs of the sixth aspect, the method in any one of the seventh aspect and the possible designs of the seventh aspect, the method in any one of the eighth aspect and the possible designs of the eighth aspect, or the method in any one of the ninth aspect and the possible designs of the ninth aspect in embodiments of this application. For example, the computer-readable storage medium may be any usable medium that can be accessed by the computer. By way of example and not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store expected program code in a form of instructions or a data structure and that can be accessed by the computer.

According to a sixteenth aspect, an embodiment of this application provides a computer program product, including instructions. When the instructions are run on a computer, the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, the method in any one of the eighth aspect or the possible designs of the eighth aspect, or the method in any one of the ninth aspect or the possible designs of the ninth aspect is performed.

According to a seventeenth aspect, this application further provides a chip, including a processor. The processor is coupled to a memory, and is configured to: read and execute program instructions stored in the memory, so that the chip implements the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, the method in any one of the eighth aspect or the possible designs of the eighth aspect, or the method in any one of the ninth aspect or the possible designs of the ninth aspect.

For technical effects that can be achieved by each of the tenth aspect to the seventeenth aspect and the possible solutions of each aspect, refer to descriptions of technical effects that can be achieved by the first aspect or the possible solutions of the first aspect, the second aspect or the possible solutions of the second aspect, the third aspect and the possible solutions of the third aspect, the fourth aspect and the possible solutions of the fourth aspect, the fifth aspect or the possible solutions of the fifth aspect, the sixth aspect and the possible solutions of the sixth aspect, the seventh aspect and the possible solutions of the seventh aspect, the eighth aspect or the possible solutions of the eighth aspect, or the ninth aspect and the possible solutions of the ninth aspect. Details are not described herein again.

### BRIEF DESCRIPTION OF DRAWINGS

FIG. 1 is a diagram of a 5G QoS model according to this application;
FIG. 2 is a diagram of an architecture of a communication system according to this application;
FIG. 3 is a diagram of a scenario of an MEC solution based on a 5G architecture according to this application;
FIG. 4 is a diagram of a QNC mechanism according to this application;
FIG. 5 is a flowchart of a communication method according to this application;
FIG. 6 is a diagram of a QNC notification scenario according to this application;
FIG. 7 is a flowchart of an example of a communication method according to this application;
FIG. 8 is a flowchart of another communication method according to this application;
FIG. 9 is a diagram of another QNC notification scenario according to this application;
FIG. 10 is a flowchart of an example of another communication method according to this application;
FIG. 11 is a flowchart of another communication method according to this application;
FIG. 12 is a diagram of another QNC notification scenario according to this application;
FIG. 13 is a flowchart of an example of another communication method according to this application;
FIG. 14 is a flowchart of another communication method according to this application;
FIG. 15 is a diagram of another QNC notification scenario according to this application;
FIG. 16 is a flowchart of an example of another communication method according to this application;
FIG. 17 is a diagram of a structure of a communication apparatus according to this application; and
FIG. 18 is a diagram of a structure of a communication apparatus according to this application.

### DESCRIPTION OF EMBODIMENTS

The following further describes in detail this application with reference to accompanying drawings.

Embodiments of this application provide a communication method and apparatus, to shorten a QNC notification path, so that an AF responds quickly. The method and the apparatus in this application are based on a same technical concept. Because problem-resolving principles of the method and the apparatus are similar, mutual reference may be made to implementations of the apparatus and the method, and repeated parts are not described.

In descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the descriptions of this application, the term "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes, in detail with reference to the accompanying drawings, a communication method and apparatus provided in embodiments of this application.

FIG. 2 shows a possible architecture of a communication system to which a communication method is applicable according to this application. The architecture of the communication system may include a radio access network, a terminal device, and a core network. For example, in the architecture of the communication system, the radio access network may include an access network device ((radio) access network, (R)AN). The core network may include a network exposure function (network exposure function, NEF) network element, a policy control function (policy control function, PCF) network element, a unified data management (unified data management, UDM) function network element, an application function (application function, AF) network element, an access and mobility management function (access and mobility management function, AMF) network element, a session management function (session management function, SMF) network element, and a user plane function (user plane function, UPF) network element. The network elements or devices may be connected through interfaces. Names of the interfaces shown in FIG. 2 are merely an example for description. This is not specifically limited in embodiments of this application. It should be understood that this embodiment of this application is not limited to the communication system shown in FIG. 2. Names of the network elements shown in FIG. 2 are merely used as examples for description herein, and do not constitute limitations on the network elements included in the architecture of the communication system to which the method in this application is applicable. Functions of the network elements or devices in the communication system are described in detail below.

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 2, the terminal device is shown as UE, which is merely used as an example. No limitation is imposed on the terminal device.

The (R)AN device is a device that provides access for the terminal device, and includes a radio access network (radio access network, AN) device and an access network (access network, AN) device. The RAN device is mainly a 3GPP network wireless network device, and the AN device may be an access network device defined in non-3GPP. The RAN device is mainly responsible for functions such as radio resource management, quality of service (quality of service, QoS) management, and data compression and encryption on an air interface side. The access network device may include base stations in various forms, such as a macro base station, a micro base station (also referred to as a small cell), a relay station, and an access point. In systems using different radio access technologies, names of devices having a base station function may be different. For example, in a 5G system, the device is referred to as a RAN device or a gNB (5G NodeB) device.

The access and mobility management function network element may be configured to manage access control and mobility of the terminal device. In actual application, the access and mobility management function network element includes a mobility management function in a mobility management entity (mobility management entity, MME) in a network framework of long term evolution (long term evolution, LTE), and includes an access management function. The access and mobility management function network element may be specifically responsible for registration of the terminal device, mobility management, a tracking area update procedure, reachability detection, selection of a session management function network element, mobility status transition management, and the like. For example, in 5G, the access and mobility management function network element may be an AMF network element, for example, as shown in FIG. 2. In future communication, for example, in 6G, the access and mobility management function network element may still be an AMF network element or have another name. This is not limited in this application. When the access and mobility management function network element is the AMF network element, the AMF may provide an Namf service.

The session management function network element may be configured to be responsible for session management (including session establishment, modification, and release) of the terminal device, selection and reselection of a user plane function network element, internet protocol (internet protocol, IP) address assignment of the terminal device, quality of service (quality of service, QoS) control, and the like. For example, in 5G, the session management function network element may be an SMF network element, for example, as shown in FIG. 2. In future communication, for example, in 6G, the session management function network element may still be an SMF network element or have another name. This is not limited in this application. When the session management function network element is the SMF network element, the SMF may provide an Nsmf service.

The user plane function network element is responsible for user data forwarding and receiving in the terminal device. The user plane function network element may receive user data from a data network, and transmit the user data to the terminal device through the access network device. The UPF network element may further receive the user data from the terminal device through the access network device, and forward the user data to the data network. Transmission resources and scheduling functions that are used by the UPF network element to provide services for the terminal device are managed and controlled by the SMF network element. For example, in 5G, the user plane function network element may be a UPF network element, for example, as shown in FIG. 2. In future communication, for example, in 6G, the user plane function network element may still be a UPF network element or have another name. This is not limited in this application.

The policy control function network element mainly supports providing a unified policy framework to control network behavior and providing policy rules for a network function at a control layer, and is responsible for obtaining subscription information related to policy decisions. For example, in 5G, the policy control function network element may be a PCF network element, for example, as shown in FIG. 2. In future communication, for example, in 6G, the policy control function network element may still be a PCF network element or have another name. This is not limited in this application. When the policy control function network element is the PCF network element, the PCF network element may provide an Npcf service.

The network exposure function network element mainly supports secure interaction between the 3GPP network and a third-party application. For example, in 5G, the network exposure function network element may be an NEF network element (including a local (local) NEF), for example, as shown in FIG. 2. In future communication, for example, in 6G, the network exposure function network element may still be an NEF network element or have another name. This is not limited in this application. When the network exposure function network element is the NEF, the NEF may provide an Nnef service for another network function network element. The core network can provide capability exposure information for the AF through the NEF.

The application function network element mainly supports interacting with a 3GPP core network to provide services, for example, influence on data routing decision, a policy control function, or some third-party services provided for a network side. For example, in 5G, the application function network element may be an AF network element, for example, as shown in FIG. 2. In future communication, for example, in 6G, the application function network element may still be an AF network element or have another name. This is not limited in this application. When the application function network element is the AF network element, the AF network element may provide an Naf service. The AF may provide a service for the core network through the NEF.

The unified data management function network element is used for generation of authentication credentials, user identification handling (for example, storage and management of permanent user identifiers), access authorization control, subscription data management, and the like. For example, in 5G, the unified data management function network element may be a UDM network element, for example, as shown in FIG. 2. In future communication, for example, in 6G, the unified data management function network element may still be a UDM network element or have another name. This is not limited in this application. When the unified data management function network element is the UDM network element, the UDM network element may provide an Nudm service.

The data network (data network, DN) is a service network that provides a data transmission service for a user, for example, an IP multimedia service (IP multimedia service, IMS) or the internet (Internet).

The UE accesses the DN by using a protocol data unit (protocol data unit, PDU) session established between the UE and the DN.

Each network element in the core network may also be referred to as a functional entity or device, and may be a network element implemented on dedicated hardware, a software instance running on dedicated hardware, or an instance of a virtualized function on a proper platform. For example, a virtualization platform may be a cloud platform.

It should be noted that the architecture of the communication system shown in FIG. 2 is not limited to including only the network elements shown in the figure, and may further include other devices not shown in the figure, which are not specifically described herein one by one in this application.

It should be noted that a distribution form of the network elements is not limited in embodiments of this application. The distribution form shown in FIG. 2 is merely an example, and is not limited in this application.

For ease of description, in this application, the network elements shown in FIG. 2 are used as an example for description below, and an XX network element is directly referred to as XX for short. For example, the SMF network element is referred to as an SMF for short. It should be understood that names of all network elements in this application are merely used as examples, and may also be referred to as other names in future communication, or the network element in this application may be replaced by another entity or device that has a same function in future communication. This is not limited in this application. Unified descriptions are provided herein. Details are not described below again.

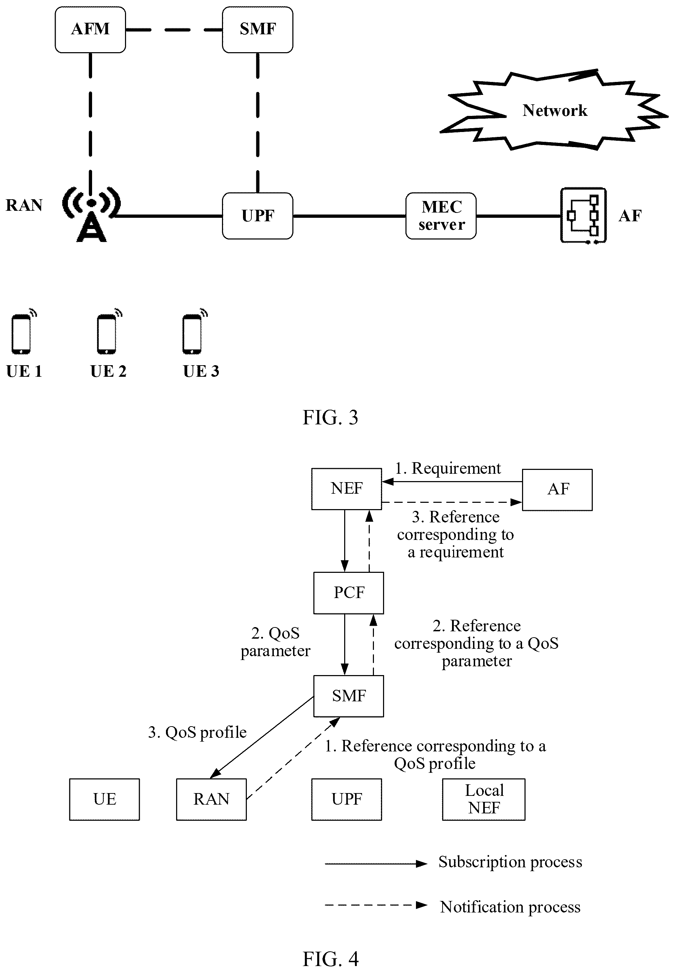

Based on the architecture shown in FIG. 2, embodiments of this application may be applied to a mobile edge computing (mobile edge computing, MEC) scenario. An MEC technology is proposed by the European telecommunication standards institute (European telecommunication standard institute, ETSI) to effectively meet requirements of high bandwidth and low latency required by rapid development of the mobile internet and the internet of things and reduce network load. The MEC technology may provide low-latency and high-bandwidth services for the users. For example, FIG. 3 is a diagram of a scenario of an MEC solution based on a 5G architecture to which an embodiment of this application is applicable. In this scenario, an MEC server is deployed at a sink UPF (that is, a local UPF). In a deployment manner shown by a connection line in FIG. 3, the MEC server shown in FIG. 3 is close to a user, and can provide a low-latency and high-bandwidth service for the user.

Currently, in 5G QoS management, a QNC mechanism may include two parts: a subscription process and a notification process. FIG. 4 is a diagram of a QNC mechanism.

The subscription process may be as follows:
(1) An AF sends a QoS requirement (requirement) to a PCF, where the requirement may be a series of QoS requirements that are sequentially arranged. The QoS requirement indicates quality of service of a service flow that needs to be met by a network side (for example, a RAN). For example, the QoS requirement may include one or more of the following: a packet delay budget (packet delay budget, PDB), a packet error rate (packet error rate, PER), a GBR, and the like.
(2) The PCF sends an alternative (alternative) QoS parameter (alternative QoS parameter, AQParameter) to an SMF. AQParameter may be a series of QoS parameters that are sequentially arranged, and AQParameter is determined by the PCF based on the requirement. The QoS parameter may include one or more parameters. For example, the QoS parameter may include one or more of the following: a PDB, a PER, a GBR, and the like.
(3) The SMF sends an alternative QoS profile (alternative QoS profile, AQProfile) to the RAN. AQProfile may be a series of QoS profiles that are sequentially arranged, and AQProfile is determined by the SMF based on AQParameter. AQProfile may include one or more QoS parameters. For example, AQProfile may include one or more of the following: a PDB, a PER, a GFBR, and the like.

It should be noted that, in the descriptions of this application, an alternative (alternative) XX may indicate that a corresponding XX may be selected between XXs based on a current RAN resource. For example, an alternative (alternative) QoS profile may indicate that a plurality of QoS profiles may be selected between different RAN resources.

The notification process may be as follows:
(1) When congestion occurs in the RAN, that is, the current resource of the RAN cannot meet a GBR QoS flow requirement, or when the resource changes, that is, the RAN determines that the current resource can meet the GBR QoS flow requirement again, the RAN determines AQProfile that matches the current resource, and reports a reference (reference) corresponding to AQProfile (that is, reference to AQProfile) to the SMF.
(2) The SMF determines reference to AQParameter based on reference to AQProfile, and sends reference to AQParameter to the PCF.
(3) The PCF determines reference to AQRequirement based on reference to AQParameter, and sends reference to AQRequirement to an AF.
(4) The AF determines, based on reference to AQRequirement, a QoS requirement that can be met by a network side resource (that is, a RAN resource), to perform transmission adjustment, for example, adjust a bit rate.

The GBR QoS flow requirement may be any one or more of the following: a packet delay budget (packet delay budget, PDB, for example, a transmission time of a data packet from UE to a UPF, that is, a delay), and a packet error rate (packet error rate, PER).

It can be learned from the foregoing descriptions that when congestion occurs in the RAN, a QNC notification path is that the RAN notifies the SMF, the SMF notifies the PCF, and the PCF notifies the AF. Because the PCF is deployed at a high location, that is, is far away from the user, the foregoing notification path is long, and the AF may not be able to respond in a timely manner, resulting in poor user experience.

Based on this, an embodiment of this application proposes a communication method, to reduce a QNC notification path, so that an AF responds quickly, thereby ensuring user experience. The following describes, in detail with reference to specific embodiments, the communication method provided in embodiments of this application.

It should be noted that, in the following embodiments, when an XX network element or device is an execution body for an operation, it may be understood that the XX network element or device performs the operation, or may be understood that a processor, a chip, a functional module, or the like in the XX network element or device performs the operation. For example, an operation performed by an access network device may be understood as being performed by the access network device, or may be understood as being performed by a processor, a chip, or a functional module in the access network device.

It should be noted that, in the following embodiments, an example in which an AF directly interacts with a network element in a core network is used for description in some descriptions. It should be understood that when the AF is a third-party AF, the AF may interact with a network element in the core network via an NEF. Similarly, the network element in the core network may also interact with the AF via the NEF.

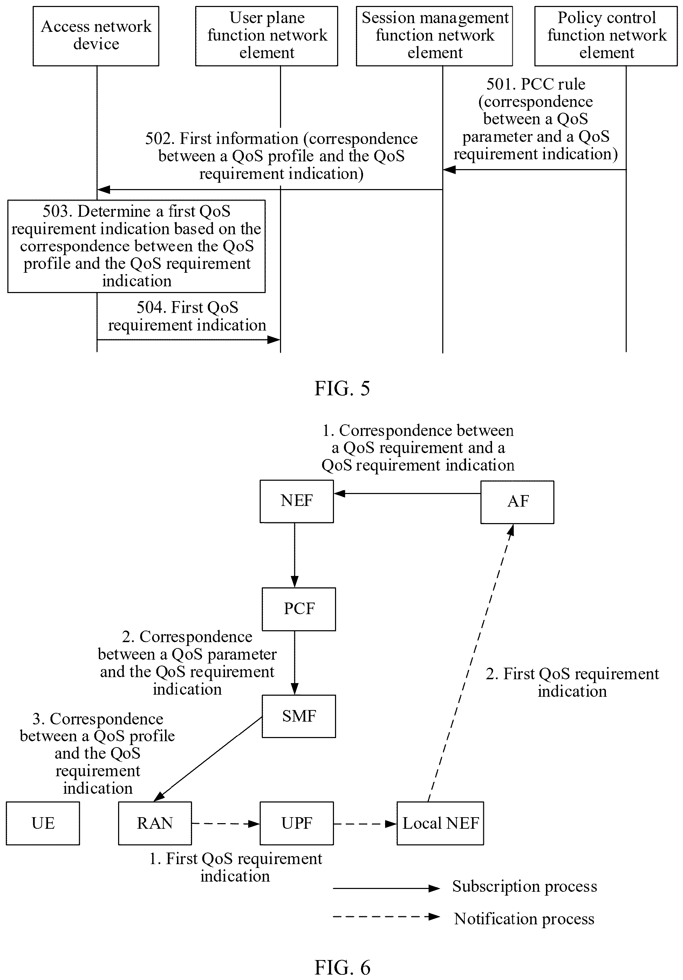

Based on the foregoing descriptions, an embodiment of this application provides a communication method. Refer to FIG. 5. A specific procedure of the method may include the following steps.

Step 501: A session management function network element receives a policy and charging control (policy and charging control, PCC) rule (rules) from a policy control function network element, where the PCC rule includes a correspondence between a QoS parameter and a QoS requirement indication.

Optionally, the QoS parameter may be one or more parameters, for example, at least one of a PDB, a PER, or a GBR.

In an optional implementation, an application function network element sends a QoS creation request to the policy control function network element via a network exposure function network element, so that the policy control function network element determines the PCC rule based on the QoS creation request and then sends the PCC rule to the session management function network element. The QoS creation request may include one or more of the following: service flow information, a network congestion notification indication, a QoS requirement, and the like.

For example, the network congestion notification indication may be a direct network congestion indication (direct network congestion indication), or may be referred to as a direct notification of network congestion indication (direct notification of network congestion indication). The indication may indicate that the AF expects to quickly obtain a network congestion notification, or may be understood as that the indication indicates a network side to expose network congestion via a user plane, to meet a requirement of quickly obtaining the network congestion notification by the AF.

The QoS requirement may be AQRequirement (alternative QoS requirement, alternative QoS requirement).

Optionally, AQRequirement may include a QoS requirement indication allocated by the application function network element, that is, the QoS requirement indication is from the application function network element. The QoS requirement indication may be, for example, a reference corresponding to the alternative QoS requirement (reference to AQRequirement). In a possible example, content of AQRequirement may be shown in Table 1.

**Table 1**

| reference to AQRequirement | Requirement |
|---|---|
| Reference-1 | Requirement-1 |
| Reference-2 | Requirement-2 |

Reference-1 and Reference-2 may be understood as indexes, sequence numbers, identifiers, other indications, or the like of QoS requirements. Requirement-1 and Requirement-2 are specific QoS requirements. For example, Requirement-1 and Requirement-2 may be PDB-1 and PDB-2, or Requirement-1 and Requirement-2 may be a PDB and a PER, or may be other requirements. This is not limited in this application. It can be learned from Table 1 that Reference-1 corresponds to Requirement-1, and Reference-2 corresponds to Requirement-2. For example, Reference-1 corresponds to PDB-1, and Reference-2 corresponds to PDB-2.

The policy control function network element determines, based on the QoS requirement in the QoS creation request, a QoS parameter (for example, AQParameter) corresponding to the QoS requirement, may further determine a correspondence between the QoS parameter and the QoS requirement indication, and includes the correspondence between the QoS parameter and the QoS requirement indication in the PCC rule.

For example, when the QoS requirement includes PDB-1 and PDB-2, the policy control function network element may determine, based on the QoS requirement, that corresponding QoS parameters are PDB-1 and PDB-2.

Optionally, the policy control function network element may determine, based on the network congestion notification indication in the QoS creation request, that the PCC rule includes the QoS requirement indication. That is, the policy control function network element may determine, based on the network congestion notification indication in the QoS creation request, that the QoS requirement indication needs to be sent to the session management function network element.

In an example, content of the PCC rule may be shown in Table 2.

**Table 2**

| reference to AQRequirement | AQParameter |
|---|---|
| Reference-1 | Parameter-1 |
| Reference-2 | Parameter-2 |

Table 2 shows a correspondence between a QoS parameter and a QoS requirement indication that is included in the PCC rule. Parameter-1 and Parameter-2 are specific QoS parameters. For example, Parameter-1 and Parameter-2 may be respectively PDB-1 and PDB-2, or may be other parameters. An example is not provided herein again. It can be learned from Table 2 that Reference-1 corresponds to Parameter-1, and Reference-2 corresponds to Parameter-2. For example, Reference-1 corresponds to PDB-1, and Reference-2 corresponds to PDB-2.

In another example, the PCC rule may further include a correspondence between a QoS parameter and a QoS parameter indication (reference to AQParameter). That is, the PCC rule may include a correspondence among a QoS parameter, a QoS parameter indication, and a QoS requirement indication. For example, content of the PCC rule may be shown in Table 3.

**Table 3**

| reference to AQRequirement | reference to AQParameter | AQParameter |
|---|---|---|
| Reference-1 | Reference-a | Parameter-1 |
| Reference-2 | Reference-b | Parameter-2 |

Table 3 shows a correspondence among a QoS parameter, a QoS parameter indication, and a QoS requirement indication that is included in the PCC rule. Reference-a and Reference-b may be understood as indexes, sequence numbers, identifiers, other indications, or the like of QoS parameters. It can be learned from Table 3 that Reference-1 and Reference-a correspond to Parameter-1, and Reference-2 and Reference-b correspond to Parameter-2. For example, Reference-1 and Reference-a correspond to PDB-1, and Reference-2 and Reference-b correspond to PDB-2.

Compared with an existing PCC rule shown in Table 4 that includes only a correspondence between a QoS parameter and a QoS parameter indication, the PCC rule shown in Table 2 and Table 3 includes the correspondence between the QoS parameter and the QoS requirement indication. In this way, the session management function network element can continue to send the QoS requirement indication from the application function network element to an access network device subsequently, so that the access network device reports, in a subsequent QNC notification, a QoS requirement indication that can be identified by the application function network element.

**Table 4**

| reference to AQParameter | AQParameter |
|---|---|
| Reference-a | Parameter-1 |
| Reference-b | Parameter-2 |

Specifically, for a specific meaning of content in Table 4, refer to related descriptions in Table 3. Details are not described one by one again.

Step 502: The session management function network element sends first information to the access network device according to the PCC rule. Correspondingly, the access network device receives the first information from the session management function network element, where the first information may include the correspondence between the QoS profile and the QoS requirement indication, and the QoS parameter corresponds to the QoS profile.

AQProfile may be understood as a QoS parameter corresponding to a profile, for example, one or more of a PDB (a delay between UE and a UPF), a PER, or a GFBR. The GFBR may include an uplink (uplink, UL) GFBR and/or a downlink (downlink, DL) GFBR.

For example, the session management function network element determines a corresponding QoS profile (for example, AQProfile) based on a QoS parameter in the PCC rule, further determines a correspondence between a QoS profile and a QoS requirement indication, and includes the correspondence between the QoS profile and the QoS requirement indication in the first information.

In an example, content of the first information may be shown in Table 5.

**Table 5**

| reference to AQRequirement | AQProfile |
|---|---|
| Reference-1 | profile-1 |
| Reference-2 | profile-2 |

Table 5 shows a correspondence between a QoS profile and a QoS requirement indication that is included in the first information. profile-1 and profile-2 are specific content of the QoS profile. For example, profile-1 and profile-2 may be respectively PDB-1 and PDB-2, or may be other content. An example is not provided herein again. It can be learned from Table 5 that Reference-1 corresponds to profile-1, and Reference-2 corresponds to profile-2. For example, Reference-1 corresponds to PDB-1, and Reference-2 corresponds to PDB-2.

In another example, the first information may further include a correspondence between a QoS profile and a QoS profile indication (reference to AQProfile), that is, the first information may include a correspondence among a QoS profile, a QoS profile indication, and a QoS requirement indication. For example, content of the first information may be shown in Table 6.

**Table 6**

| reference to AQRequirement | reference to AQProfile | AQProfile |
|---|---|---|
| Reference-1 | Reference-x | profile-1 |
| Reference-2 | Reference-y | profile-2 |

Table 6 shows a correspondence among a QoS profile, a QoS profile indication, and a QoS requirement indication that is included in the first information. Reference-x and Reference-y may be understood as indexes, sequence numbers, identifiers, other indications, or the like of QoS profiles. It can be learned from Table 6 that Reference-1 and Reference-x correspond to profile-1, and Reference-2 and Reference-y correspond to profile-2. For example, Reference-1 and Reference-x correspond to PDB-1, and Reference-2 and Reference-y correspond to PDB-2.

Compared with an existing correspondence shown in Table 7 that is between a QoS profile and a QoS profile indication and that is sent by the session management network element to the access network device, the first information shown in Table 5 and Table 6 includes the correspondence between the QoS profile and the QoS requirement indication, so that the access network device can report, in a subsequent QNC notification, a QoS requirement indication that can be identified by the application function network element.

**Table 7**

| reference to AQProfile | AQProfile |
|---|---|
| Reference-x | profile-1 |
| Reference-y | profile-2 |

Specifically, for a specific meaning of content in Table 7, refer to related descriptions in Table 6. Details are not described one by one again.

Optionally, the first information may be N2 information (N2 message), or the first information may be included in the N2 information. This is not limited in this application.

Optionally, the PCC rule may further include a network congestion notification indication.

In an optional implementation, when the PCC rule includes the network congestion notification indication, the session management function network element may determine, based on the network congestion notification indication, to send the QoS requirement indication to the access network device (which may also be understood as sending a correspondence between a QoS profile and a QoS requirement indication). That is, the session management function network element may determine, based on the network congestion notification indication, that the QoS requirement indication needs to be sent to the access network device. In other words, the network congestion notification indication may trigger the session management function network element to send the QoS requirement indication to the access network device.

In another optional implementation, the PCC rule may further include first indication information, where the first indication information indicates the session management function network element to send the QoS requirement indication to the access network device, that is, the first indication information indicates the session management function network element to send the correspondence between the QoS profile and the QoS requirement indication to the access network device.

Step 503: The access network device determines a first QoS requirement indication based on the correspondence between the QoS profile and the QoS requirement indication. The first QoS requirement indication is a QoS requirement indication corresponding to a QoS profile that can be met by a current resource of the access network device.

When congestion occurs in the access network device, the access network device determines the first QoS requirement indication corresponding to the QoS profile that can be met by the current resource. Specifically, the access network device may determine the QoS profile that can be met by the current resource, and determine the corresponding first QoS requirement indication. The QoS profile that can be met by the current resource may be understood as a QoS parameter that can be met by the current resource of the access network device, for example, a PDB, a PER, or a GFBR.

Step 504: The access network device sends the first QoS requirement indication to a user plane function network element.

Further, the user plane function network element sends the first QoS requirement indication to the application function network element.

Optionally, the user plane function network element may send the first QoS requirement indication to the application function network element via a local network exposure function network element.

After receiving the first QoS requirement indication, the application function network element may determine a QoS requirement corresponding to the first QoS requirement indication, that is, may determine a QoS requirement that can be met by the current resource of the access network device, to perform transmission adjustment, for example, adjust a bit rate.

According to the foregoing communication method in this application, QNC may be exposed to the application function network element via the user plane, that is, a QoS requirement indication that can be identified by the application function network element is sent to the application function network element via the user plane function network element, so that a QNC notification path can be short, and the application function network element can respond quickly, thereby ensuring user experience. In addition, in the method, the user plane function network element only needs to forward the QoS requirement indication to the application function network element, and does not need to perform much processing, so that complexity is low.

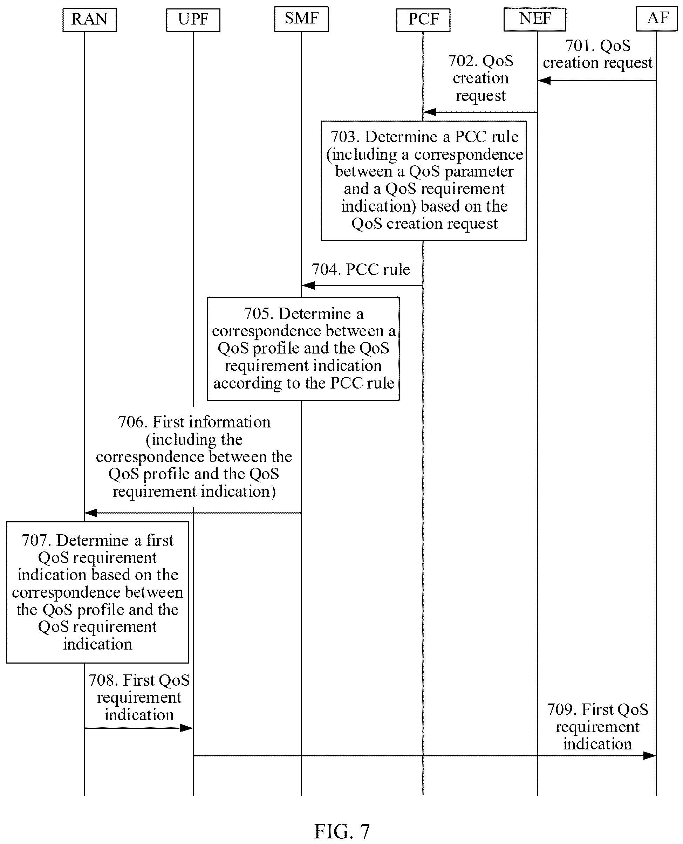

Based on the foregoing descriptions, the following describes, in detail by using specific examples shown in FIG. 6 and FIG. 7, the communication method provided in the embodiment shown in FIG. 5. In the following examples shown in FIG. 6 and FIG. 7, descriptions are provided by using an example in which a session management function network element is an SMF, a policy control function network element is a PCF, an access network device is a RAN, an application function network element is an AF, and a network exposure function network element is an NEF.

FIG. 6 is a diagram of a QNC notification scenario. In this scenario, a QNC subscription process is as follows: An AF sends a correspondence between a QoS requirement and a QoS requirement indication to a PCF via an NEF; the PCF determines a corresponding QoS parameter based on the QoS requirement, and sends a correspondence between the QoS parameter and the QoS requirement indication to an SMF; and the SMF determines a corresponding QoS profile based on the QoS parameter, and sends a correspondence between the QoS profile and the QoS requirement indication to a RAN. A QNC notification process is as follows: When congestion occurs in the RAN, the RAN determines a QoS profile that can be met by a current resource, and determines a first QoS requirement indication corresponding to the QoS profile. Then, the RAN sends the first QoS requirement indication to the UPF, and the UPF may send the first QoS requirement indication to the AF via a local NEF, so that the AF determines a corresponding QoS requirement by using the first QoS requirement indication, to perform transmission adjustment, for example, adjust a bit rate.

Based on the scenario shown in FIG. 6, FIG. 7 shows an example of a communication method. For example, a specific procedure of the example may include the following steps.

Step 701: An AF sends a QoS creation request (for example, an AFSessionWithQoS creation request) to an NEF.

The QoS creation request may include service flow information (also referred to as a service flow description), a network congestion notification indication (direct network congestion indication), and a QoS requirement (AQRequirement).

AQRequirepment may include a QoS requirement indication (reference to AQRequirement) allocated by the AF. For example, for content of AQRequirepment, refer to Table 1.

Step 702: The NEF sends the QoS creation request to a PCF.

It should be noted that, step 701 and step 702 in which the AF sends the QoS creation request to the PCF via the NEF are an optional method. It should be understood that the AF may not send the QoS creation request to the PCF via the NEF, that is, the AF may directly send the QoS creation request to the PCF.

Step 703: The PCF determines a PCC rule based on the QoS creation request.

Specifically, the PCF determines a corresponding QoS parameter based on AQRequirement in the QoS creation request, and includes a correspondence between the QoS parameter and the QoS requirement indication in the PCC rule. For example, content of the PCC rule may be shown in Table 2 and Table 3, and is not described in detail herein again.

In an optional manner, the PCC rule may include a network congestion notification indication. The PCF may determine, based on the network congestion notification indication, that the PCC rule includes the QoS requirement indication. In other words, when determining that the AF subscribes to the network congestion notification, the PCF may determine that the PCC rule includes the QoS requirement indication.

For example, the PCC rule may further include first indication information, and the first indication information indicates an SMF to send the QoS requirement indication to a RAN. Optionally, the PCF may include the first indication information in the PCC rule when determining that the following condition is met: the AF subscribes to a network congestion notification (that is, the AF needs a core network to expose network congestion), the AF needs guaranteed QoS, the AF has an alternative QoS requirement, or the like.

Optionally, the PCF may determine, for any service flow, whether the foregoing condition is met.

Step 704: The PCF sends the PCC rule to the SMF.

Step 705: The SMF determines a correspondence between a QoS profile and a QoS requirement indication according to the PCC rule.

Specifically, the PCF determines a corresponding QoS profile based on the QoS parameter in the PCC rule, and may determine the correspondence between the QoS profile and the QoS requirement indication based on the correspondence between the QoS parameter and the QoS requirement indication.

Step 706: The SMF sends first information to the RAN, where the first information includes the correspondence between the QoS profile and the QoS requirement indication. For example, content of the first information may be shown in Table 5 and Table 6.

In a possible example, when the PCC rule includes the network congestion notification indication, the SMF may determine, based on the network congestion notification indication, to send the QoS requirement indication to the RAN. That is, the network congestion notification indication may trigger the SMF to send the QoS requirement indication to the RAN.

In another possible example, the SMF may send the QoS requirement indication to the RAN based on the first indication information in the PCC rule.

Step 707: When congestion occurs in the RAN, the RAN determines a QoS profile that can be met by a current resource, and determines a first QoS requirement indication based on the correspondence between the QoS profile and the QoS requirement indication, where the first QoS requirement indication corresponds to the QoS profile that can be met by the current resource of the RAN.

Step 708: The RAN sends the first QoS requirement indication to a UPF.

The UPF may be a local UPF, that is, a local session anchor.

Step 709: The UPF sends the first QoS requirement indication to the AF.

After receiving the first QoS requirement indication, the AF may determine a QoS requirement corresponding to the first QoS requirement indication, to perform transmission adjustment, for example, adjust a bit rate, so as to adapt to a congestion status of the RAN.

For example, the UPF may send the first QoS requirement indication to the AF via a local NEF, which is not shown in FIG. 7.

In this example, the UPF performs a QNC notification, so that a QNC notification path is short, and the AF can respond quickly, thereby ensuring user experience.

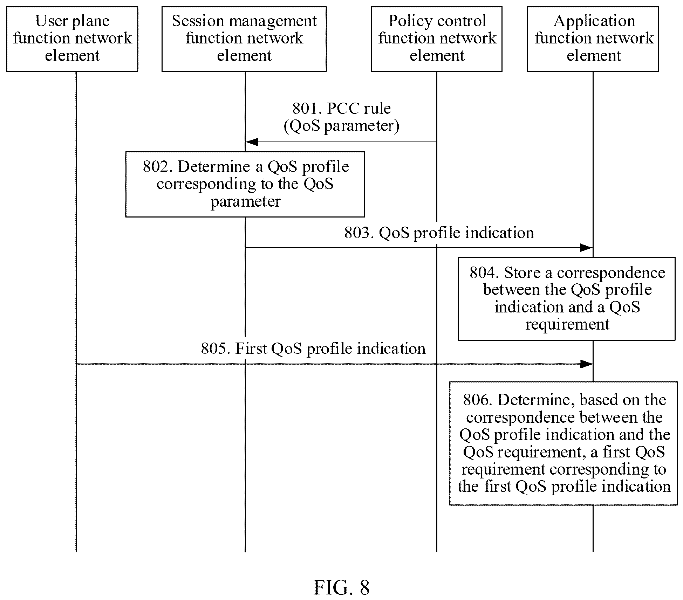

Based on the foregoing descriptions, an embodiment of this application provides another communication method. Different from the foregoing communication method in the foregoing described embodiment in which the access network device exposes the QoS requirement indication to the application function network element, in the communication method, a session management function network element exposes a QoS profile indication to an application function network element. Refer to FIG. 8. A specific procedure of the method may include the following steps.

Step 801: A session management function network element receives a PCC rule from a policy control function network element, where the PCC rule includes a QoS parameter (AQRequirement).

In an optional implementation, an application function network element sends a QoS creation request to the policy control function network element via a network exposure function network element, so that the policy control function network element determines the PCC rule based on the QoS creation request and then sends the PCC rule to the session management function network element. The QoS creation request may include one or more of the following: service flow information, a network congestion notification indication, a QoS requirement, and the like.

Specifically, for related descriptions of the network congestion notification indication and the QoS requirement, refer to related descriptions in step 501.

The policy control function network element determines, based on the QoS requirement in the QoS creation request, a QoS parameter (for example, AQParameter) corresponding to the QoS requirement, and includes the QoS parameter in the PCC rule.

Step 802: The session management function network element determines a QoS profile (AQProfile) corresponding to the QoS parameter.

For example, the QoS profile may include one or more of a PDB, a PER, or a GFBR.

Step 803: The session management function network element sends a QoS profile indication (reference to AQProfile) corresponding to the QoS profile to the application function network element.

For example, the QoS profile indication may be, for example, Reference-x or Reference-y, or an index, a sequence number, an identifier, or another indication of another QoS profile.

Optionally, the PCC rule may further include a network congestion notification indication.

In an optional implementation, when the PCC rule includes the network congestion notification indication, the session management function network element may determine, based on the network congestion notification indication, to send the QoS profile indication corresponding to the QoS profile to the application function network element. That is, the session management function network element may determine, based on the network congestion notification indication, that the QoS profile indication needs to be sent to the application function network element. In other words, the network congestion notification indication may trigger the session management function network element to send the QoS profile indication to the application function network element.

In another optional implementation, the PCC rule may further include first indication information, and the first indication information indicates the session management function network element to send the QoS profile indication corresponding to the QoS profile to the application function network element.

For example, the session management function network element may send the QoS profile to an access network device, so that when congestion occurs, the access network device determines a QoS profile that can be met.

Step 804: After the application function network element receives, from the session management function network element, the QoS profile indication corresponding to the QoS profile, the application function network element stores a correspondence between the QoS profile indication and the QoS requirement.

The QoS profile indication may include a list of QoS profile indications that are sequentially arranged. For example, the application function network element may determine the correspondence between the QoS profile indication and the QoS requirement based on the QoS profile indications that are sequentially arranged and QoS requirements that are sequentially arranged.

For example, the correspondence between the QoS profile indication and the QoS requirement that is stored by the application function network element may be shown in the correspondences between the left two columns in Table 6 in the descriptions of the foregoing embodiment. Details are not described herein again.

For example, the application function network element may store a correspondence between the QoS profile indication, a QoS requirement indication, and the QoS requirement.

Step 805: The application function network element receives a first QoS profile indication from a user plane function network element.

Specifically, when congestion occurs, the access network device may determine a QoS profile that can be met by a current resource, and send a corresponding first QoS profile indication to the user plane function network element, so that the user plane function network element sends the first QoS profile indication to the application function network element.

Step 806: The application function network element determines, based on the correspondence between the QoS profile indication and the QoS requirement, a first QoS requirement corresponding to the first QoS profile indication.

After determining the first QoS requirement, the application function network element may determine a QoS requirement that can be met by a resource of the access network device, to perform transmission adjustment, for example, adjust a bit rate.

In the foregoing communication method, when QNC is exposed via a user plane, after determining the QoS profile, the session management function network element exposes the QoS profile indication to the application function network element, and then the application function network element stores a correspondence between the QoS profile indication and a QoS requirement indication. When congestion occurs in the access network device, the access network device determines a QoS profile indication corresponding to the QoS profile that can be met by the current resource, and exposes the QoS profile indication to the application function network element via the user plane function network element, so that the application function network element determines, based on the correspondence, a QoS requirement that can be met by the current resource of the access network device. In this way, a QNC notification path can be short, and the application function network element can respond quickly, thereby ensuring user experience. In addition, change of logic of the UPF network element can be avoided, thereby reducing complexity of the network element.

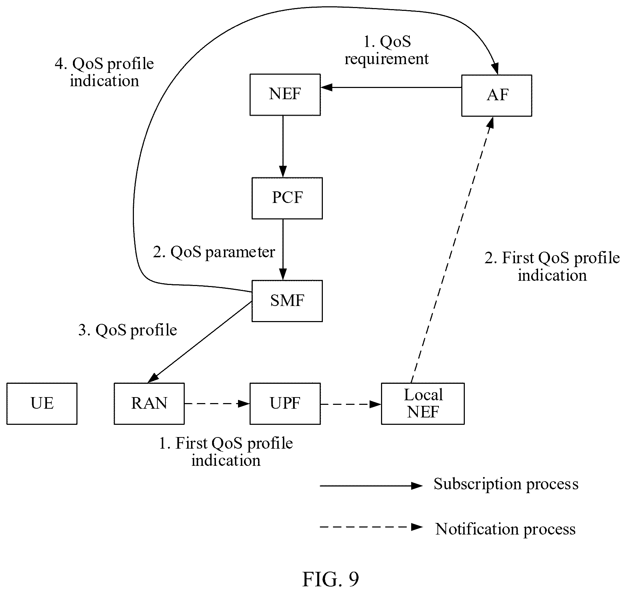

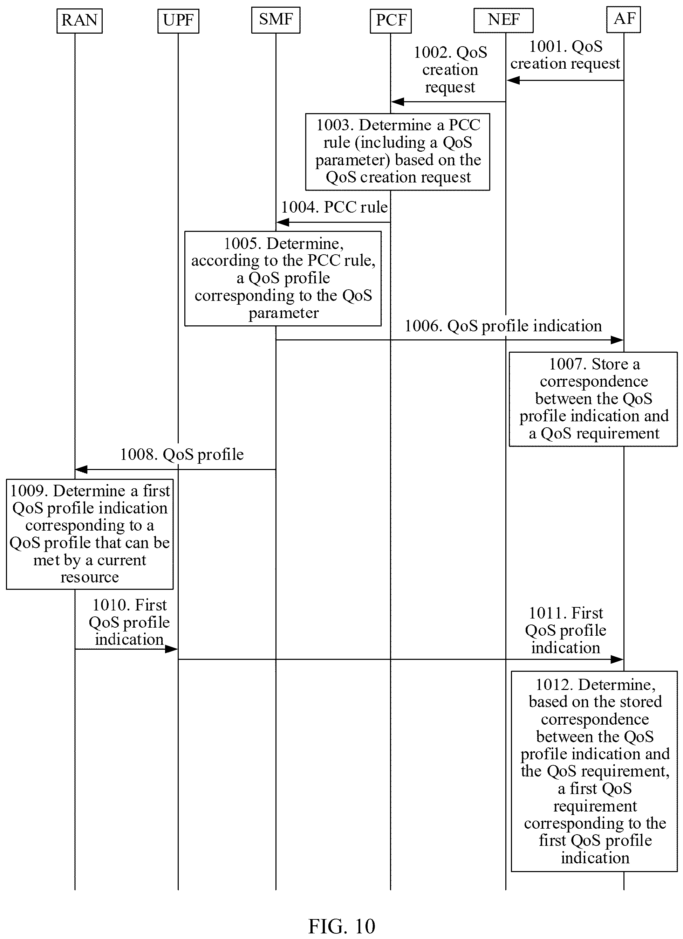

Based on the foregoing descriptions, the following describes, in detail by using specific examples shown in FIG. 9 and FIG. 10, the communication method provided in the embodiment shown in FIG. 8. In the following examples shown in FIG. 9 and FIG. 10, descriptions are provided by using an example in which a session management function network element is an SMF, a policy control function network element is a PCF, an access network device is a RAN, an application function network element is an AF, and a network exposure function network element is an NEF.

FIG. 9 is a diagram of a QNC notification scenario. In this scenario, a QNC subscription process is as follows: An AF sends a QoS requirement to a PCF via an NEF; the PCF determines a corresponding QoS parameter based on the QoS requirement, and sends the QoS parameter to an SMF; the SMF determines a corresponding QoS profile based on the QoS parameter, and sends the QoS profile to a RAN; and the SMF sends a QoS profile indication to the AF, so that the AF stores a correspondence between the QoS profile indication and the QoS requirement. A QNC notification process is as follows: When congestion occurs in the RAN, the RAN determines a first QoS profile indication corresponding to a QoS profile that can be met by a current resource, and sends the first QoS profile indication to a UPF. Then, the UPF may send the first QoS profile indication to the AF via a local NEF, so that the AF determines, based on the stored correspondence between the QoS profile indication and the QoS requirement, a first QoS requirement corresponding to the first QoS profile indication, to perform transmission adjustment, for example, adjust a bit rate.

Based on the scenario shown in FIG. 9, FIG. 10 shows an example of a communication method. For example, a specific procedure of the example may include the following steps.

Step 1001 and step 1002: Refer to step 701 and step 702. Details are not described herein again.

Step 1003: The PCF determines a PCC rule based on the QoS creation request, where the PCC rule includes a QoS parameter (AQRequirement).

Specifically, the PCF determines a corresponding QoS parameter based on AQRequirement in the QoS creation request, and includes the QoS parameter (AQParameter) in the PCC rule.

Optionally, the PCC rule may include a network congestion notification indication.

Optionally, the PCC rule may include first indication information, and the first indication information indicates an SMF to send a QoS profile indication (reference to AQProfile) to the AF. Further, the PCF may include the first indication information in the PCC rule when determining that the following condition is met: the AF subscribes to a network congestion notification (that is, the AF needs a core network to expose network congestion), the AF needs guaranteed QoS, the AF has an alternative QoS requirement, or the like.

Optionally, the PCF may determine, for any service flow, whether the foregoing condition is met.

Step 1004: The PCF sends the PCC rule to the SMF.

Step 1005: The SMF determines, according to the PCC rule, a QoS profile corresponding to the QoS parameter.

Step 1006: The SMF sends the QoS profile indication (reference to AQProfile) corresponding to the QoS profile to the AF.

For example, the QoS profile indication may be, for example, Reference-x or Reference-y, or an index, a sequence number, an identifier, or another indication of another QoS profile.

In an optional manner, when the PCC rule includes the network congestion notification indication, the SMF determines, based on the network congestion notification indication, to send the QoS profile indication corresponding to the QoS profile to the AF. It may also be understood that when determining that the AF subscribes to the network congestion notification, the SMF determines to send the QoS profile indication corresponding to the QoS profile to the AF. That is, the network congestion notification indication triggers the SMF to send the QoS profile indication corresponding to the QoS profile to the AF.

In another optional manner, when the PCC rule includes first indication information, the SMF sends the QoS profile indication to the AF.

Step 1007: The AF stores a correspondence between the QoS profile indication and a QoS requirement.

For example, the correspondence between the QoS profile indication and the QoS requirement that is stored by the AF may be shown in the correspondences between the left two columns in Table 6 in the descriptions of the foregoing embodiment. Details are not described herein again.

Step 1008: The SMF sends the QoS profile to a RAN.

For example, the SMF may send N2 information to the RAN, where the N2 information includes the QoS profile.

It should be understood that a sequence of step 1008 and both step 1006 and step 1007 is not limited.

Step 1009: When congestion occurs in the RAN, the RAN determines a QoS profile that can be met by a current resource, and determines a first QoS profile indication corresponding to the QoS profile that can be met by the current resource.

Step 1010: The RAN sends the first QoS profile indication to a UPF.

The UPF may be a local UPF, that is, a local session anchor.

Step 1011: The UPF sends the first QoS profile indication to the AF.

For example, the UPF may send the first QoS profile indication to the AF via a local NEF, which is not shown in FIG. 9.

Step 1012: The AF determines, based on the stored correspondence between the QoS profile indication and the QoS requirement, a first QoS requirement corresponding to the first QoS profile indication.

After determining the first QoS requirement, the AF may determine a QoS requirement that can be met by a resource of the access network device, to perform transmission adjustment, for example, adjust a bit rate.

In this example, the UPF performs a QNC notification, so that a QNC notification path is short, and the AF can respond quickly, thereby ensuring user experience.

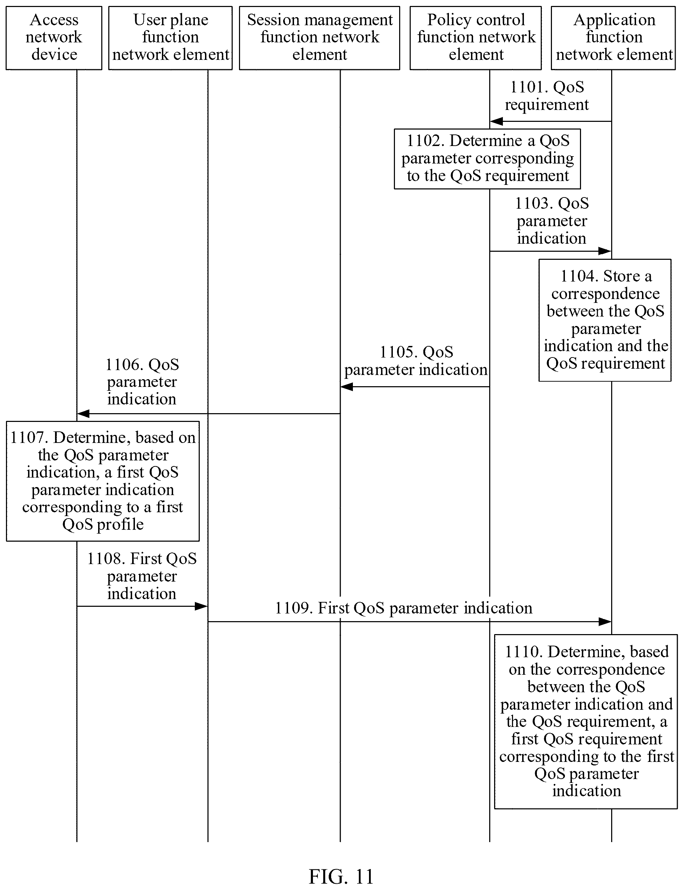

Based on the foregoing descriptions, an embodiment of this application provides another communication method. Different from the foregoing communication method in the foregoing described embodiment in which the access network device exposes the QoS requirement indication to the application function network element, or the session management function network element exposes the QoS profile indication to the application function network element, in the communication method, a policy control function network element exposes a QoS parameter indication to an application function network element. Refer to FIG. 11. A specific procedure of the method may include the following steps.

Step 1101: A policy control function network element receives a QoS requirement from an application function network element.

In an optional implementation, the application function network element sends a QoS creation request to the policy control function network element via a network exposure function network element, where the QoS creation request may include one or more of the following: service flow information, a network congestion notification indication, a QoS requirement, and the like.

Specifically, for related descriptions of the network congestion notification indication and the QoS requirement, refer to related descriptions in step 501.

Step 1102: The policy control function network element determines a QoS parameter corresponding to the QoS requirement.

Optionally, the QoS parameter may be one or more parameters, for example, at least one of a PDB, a PER, or a GBR.

Step 1103: The policy control function network element sends a QoS parameter indication corresponding to the QoS parameter to the application function network element.

For example, the QoS parameter indication may be Reference-a or Reference-b, or an index, a sequence number, an identifier, or another indication of another QoS profile.

In an optional implementation, the application function network element may send second indication information to the policy control function network element, where the second indication information indicates the policy control function network element to send the QoS parameter indication corresponding to the QoS parameter to the application function network element.

In another optional implementation, when the policy control function network element receives the network congestion notification indication from the application function network element, the policy control function network element may determine, based on the network congestion notification indication, to send the QoS parameter indication corresponding to the QoS parameter to the application function network element. That is, the policy control function network element may determine, based on the network congestion notification indication, that the QoS parameter indication corresponding to the QoS parameter needs to be sent to the application function network element. In other words, the network congestion notification indication may trigger the policy control function network element to send the QoS parameter indication corresponding to the QoS parameter to the application function network element.

Step 1104: After the application function network element receives, from the policy control function network element, the QoS parameter indication corresponding to the QoS parameter, the application function network element stores a correspondence between the QoS parameter indication and the QoS requirement.

The QoS parameter indication may include a list of QoS parameter indications that are sequentially arranged. The application function network element may determine the correspondence between the QoS parameter indication and the QoS requirement based on the QoS parameter indications that are sequentially arranged and QoS requirements that are sequentially arranged.

For example, the correspondence between the QoS parameter indication and the QoS requirement that is stored by the application function network element may include Reference-a and corresponding Requirement-1, and Reference-b and corresponding Requirement-2. For detailed descriptions of the QoS parameter indication and the QoS requirement, refer to related descriptions in the foregoing embodiment. Details are not described herein again.

Step 1105: The policy control function network element sends the QoS parameter indication to the session management function network element, and correspondingly, the session management function network element receives the QoS parameter indication from the policy control function network element.

Optionally, the policy control function network element may send a PCC rule to the session management function network element, where the PCC rule includes the QoS parameter indication.

It should be understood that a sequence of step 1105 and both step 1103 and step 1104 is not limited.

Step 1106: The session management function network element sends the QoS parameter indication to an access network device, and correspondingly, the access network device receives the QoS parameter indication from the session management function network element, so that the access network device determines the QoS parameter indication corresponding to the QoS profile.

For example, the session management function network element sends the correspondence between the QoS parameter indication and the QoS profile to the access network device.

In an optional implementation, the policy control function network element sends first indication information to the session management function network element, and correspondingly, the session management function network element receives the first indication information from the policy control function network element, where the first indication information indicates the session management function network element to send the QoS parameter indication to the access network device.

Optionally, the first indication information may be included in the PCC rule that may be sent by the policy control function network element to the session management function network element.

In another optional implementation, the session management function network element receives a network congestion notification indication from the policy control function network element, and the session management function network element determines, based on the network congestion notification indication, to send the QoS parameter indication to the access network device. That is, the session management function network element determines, based on the network congestion notification indication, that the QoS parameter indication needs to be sent to the access network device. In other words, the network congestion notification indication triggers the session management function network element to send the QoS parameter indication to the access network device.

Optionally, the network congestion notification indication may be included in the PCC rule that may be sent by the policy control function network element to the session management function network element.

Step 1107: The access network device determines, based on the QoS parameter indication, a first QoS parameter indication corresponding to a first QoS profile.

For example, when congestion occurs, the access network device determines a first QoS profile that can be met by a current resource, and the access network device determines, based on the correspondence between the QoS parameter indication and the QoS profile, the first QoS parameter indication corresponding to the first QoS profile.

Step 1108: The access network device sends the first QoS parameter indication to a user plane function network element.

Step 1109: The user plane function network element sends the first QoS parameter indication to the application function network element, and correspondingly, the application function network element receives the first QoS parameter indication from the user plane function network element.

Step 1110: The application function network element determines, based on the correspondence between the QoS parameter indication and the QoS requirement, a first QoS requirement corresponding to the first QoS parameter indication.

After determining the first QoS requirement, the application function network element may determine a QoS requirement that can be met by a resource of the access network device, to perform transmission adjustment, for example, adjust a bit rate.

According to the foregoing communication method, when QNC is exposed via a user plane, after determining the QoS parameter, the PCF exposes, to the application function network element, the QoS parameter indication corresponding to the QoS parameter, and then the application function network element stores the correspondence between the QoS parameter indication and the QoS requirement. In addition, the PCF sends the QoS parameter indication to the session management function network element, and then the session management function network element sends the QoS parameter indication to the access network device. Further, when congestion occurs in the access network device, the access network device determines a QoS parameter indication corresponding to a QoS profile that can be met by a current resource, and exposes the QoS parameter indication to the application function network element via the user plane function network element, so that the application function network element determines, based on the correspondence, a QoS requirement that can be met by the current resource of the access network device. In this way, a QNC notification path can be short, and the application function network element can respond quickly, thereby ensuring user experience. In addition, change of logic of the UPF network element can be avoided, thereby reducing complexity of the network element.

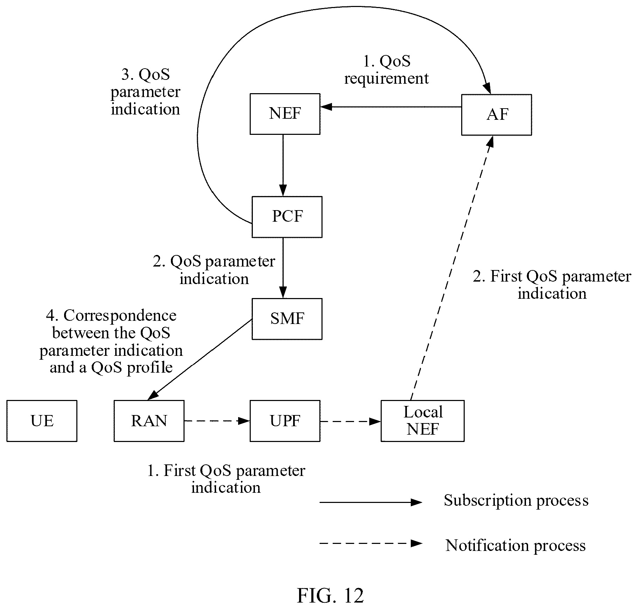

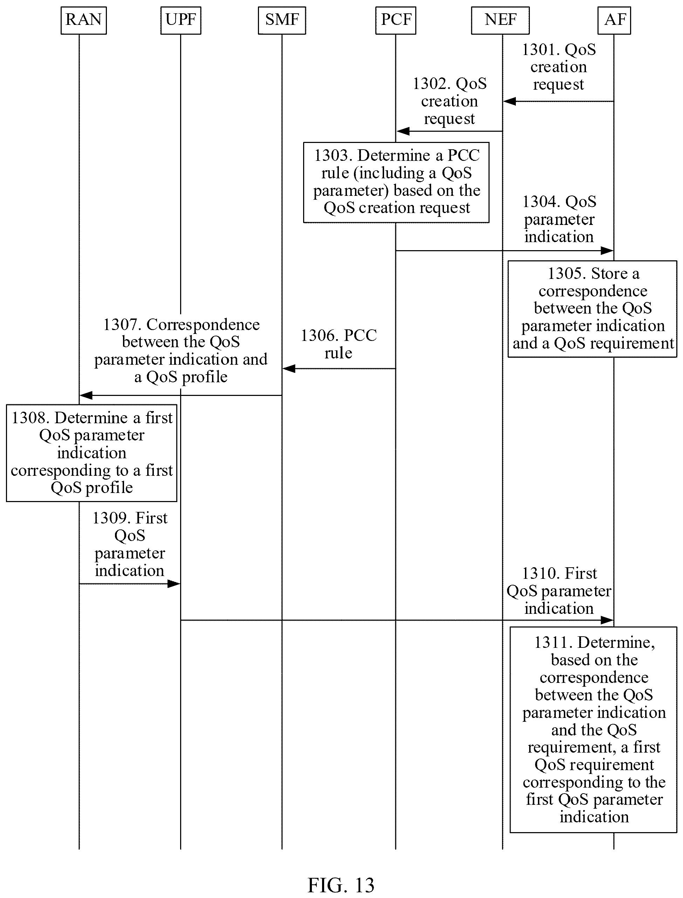

Based on the foregoing descriptions, the following describes, in detail by using specific examples shown in FIG. 12 and FIG. 13, the communication method provided in the embodiment shown in FIG. 11. In the following examples shown in FIG. 12 and FIG. 13, descriptions are provided by using an example in which a session management function network element is an SMF, a policy control function network element is a PCF, an access network device is a RAN, an application function network element is an AF, and a network exposure function network element is an NEF.

FIG. 12 is a diagram of a QNC notification scenario. In this scenario, a QNC subscription process is as follows: An AF sends a QoS requirement to a PCF via an NEF; the PCF determines a corresponding QoS parameter based on the QoS requirement, and sends a QoS parameter indication to an SMF; the PCF sends the QoS parameter indication to an AF, so that the AF stores a correspondence between the QoS parameter indication and the QoS requirement; and the SMF sends a correspondence between the QoS parameter indication and a QoS profile to a RAN. A QNC notification process is as follows: When congestion occurs in the RAN, the RAN determines a first QoS parameter indication corresponding to a first QoS profile that can be met by a current resource, and then the RAN sends the first QoS parameter indication to a UPF. The UPF sends the first QoS parameter indication to the AF via a local NEF, so that the AF determines, based on the stored correspondence between the QoS parameter indication and the QoS requirement, a first QoS requirement corresponding to the first QoS parameter indication, to perform transmission adjustment, for example, adjust a bit rate.

Based on the scenario shown in FIG. 12, FIG. 13 shows an example of a communication method. For example, a specific procedure of the example may include the following steps.

Step 1301 and step 1302: Refer to step 701 and step 702. Details are not described herein again.

Step 1303: The PCF determines a PCC rule based on the QoS creation request, where the PCC rule includes a QoS parameter (AQRequirement).

Optionally, the QoS parameter may be one or more parameters, for example, at least one of a PDB, a PER, or a GBR.

Specifically, the PCF determines a corresponding QoS parameter based on AQRequirement in the QoS creation request, and includes the QoS parameter (AQParameter) in the PCC rule.

Optionally, the PCC rule may include a network congestion notification indication.

Step 1304: The PCF sends a QoS parameter indication (reference to AQParameter) to the AF.

For example, the QoS parameter indication may be Reference-a or Reference-b, or an index, a sequence number, an identifier, or another indication of another QoS profile.

In an optional manner, when the PCC rule includes a network congestion notification indication, the PCF may determine, based on the network congestion notification indication, to send the QoS parameter indication to the AF. It may also be understood that when determining that the AF subscribes to the network congestion notification, the PCF sends the QoS parameter indication to the AF. That is, the network congestion notification triggers the PCF to send the QoS parameter indication to the AF.

In another optional manner, the AF may send second indication information to the PCF, where the second indication information indicates the PCF to send the QoS parameter indication corresponding to the QoS parameter to the AF. Optionally, the AF may send the second indication information to the PCF when determining that a service flow meets at least one of the following characteristics: the service flow needs a network congestion notification (that is, the service flow subscribes to the network congestion notification), the service flow needs guaranteed QoS, and the service flow has an alternative QoS requirement.

Step 1305: The AF stores a correspondence between the QoS parameter indication and a QoS requirement.

For example, the correspondence between the QoS parameter indication and the QoS requirement that is stored by the AF may include Reference-a and corresponding Requirement-1, and Reference-b and corresponding Requirement-2. For detailed descriptions of the QoS parameter indication and the QoS requirement, refer to related descriptions in the foregoing embodiment. Details are not described herein again.

Step 1306: The PCF sends the PCC rule to the SMF.

The PCC rule further includes a QoS parameter indication.

Optionally, the PCC rule may further include first indication information, and the first indication information indicates the SMF to send the QoS parameter indication to a RAN.

It should be understood that a sequence of step 1306 and both step 1304 and step 1305 is not limited.

Step 1307: The SMF sends a correspondence between the QoS parameter indication and a QoS profile to the RAN.

The SMF determines the QoS profile based on the QoS parameter in the PCC rule, to determine the correspondence between the QoS parameter indication and the QoS profile.

For example, the SMF sends N2 information to the RAN, where the N2 information includes the correspondence between the QoS parameter indication and the QoS profile.

Optionally, the N2 information may further include a network congestion notification indication.

In an example, when the PCC rule includes first indication information, the SMF may send the QoS parameter indication to the RAN based on the first indication information.

In another example, when the PCC rule includes a network congestion notification indication, the SMF may determine, based on the network congestion notification indication, to send the QoS parameter indication to the RAN. It may also be understood that when determining that the AF subscribes to the network congestion notification, the SMF sends the QoS parameter indication to the RAN. That is, the network congestion notification triggers the SMF to send the QoS parameter indication to the RAN.

Step 1308: When congestion occurs in the RAN, the RAN determines a first QoS profile that can be met by a current resource, and determines a first QoS parameter indication corresponding to the first QoS profile.

The RAN determines, based on the correspondence between the QoS parameter indication and the QoS profile, the first QoS parameter indication corresponding to the first QoS profile.

Step 1309: The RAN sends the first QoS parameter indication to a UPF.

The UPF may be a local UPF, that is, a local session anchor.

Step 1310: The UPF sends the first QoS parameter indication to the AF.

For example, the UPF may send the first QoS parameter indication to the AF via a local NEF, which is not shown in FIG. 13.

Step 1311: The AF determines, based on the correspondence between the QoS parameter indication and the QoS requirement, a first QoS requirement corresponding to the first QoS parameter indication.

After determining the first QoS requirement, the AF may determine a QoS requirement that can be met by a resource of the RAN, to perform transmission adjustment, for example, adjust a bit rate.

In this example, the UPF performs a QNC notification, so that a QNC notification path is short, and the AF can respond quickly, thereby ensuring user experience.

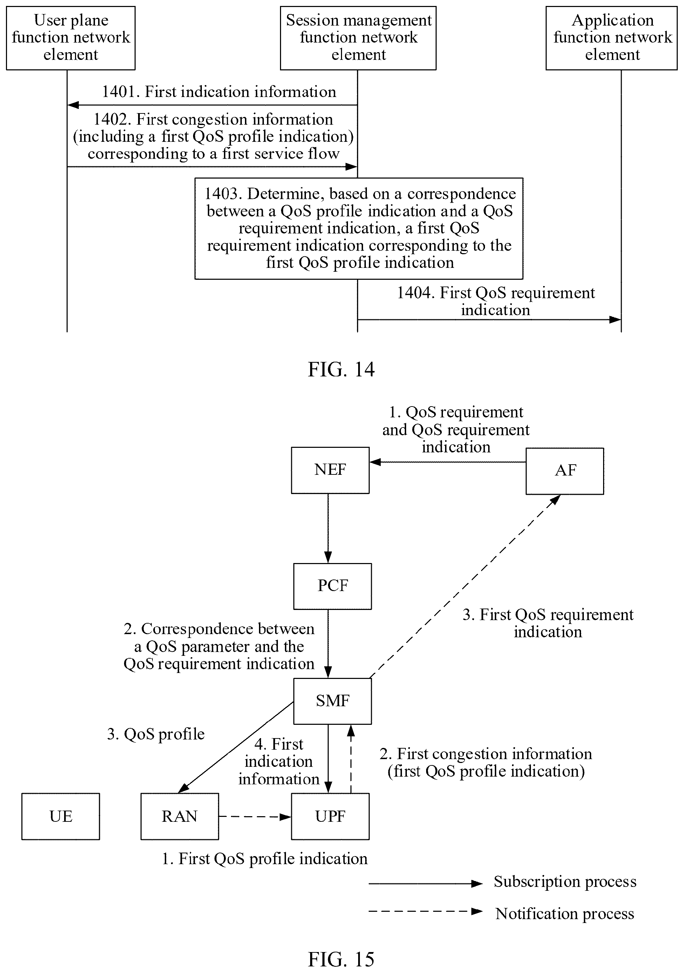

Based on the foregoing descriptions, an embodiment of this application provides another communication method. Different from the foregoing described embodiment, in the communication method, a session management function network element indicates a user plane function network element to report congestion information of a service flow that meets a condition. Refer to FIG. 14. A specific procedure of the method may include the following steps.

Step 1401: A session management function network element sends first indication information to a user plane function network element, where the first indication information indicates the user plane function network element to report, to the session management function network element, congestion information corresponding to a first service flow.

In an optional implementation, a method in which the session management function network element sends the first indication information to the user plane function network element may be as follows: The session management function network element sends the first indication information to the user plane function network element based on determining that the first service flow needs network congestion exposure and corresponds to a guaranteed bit rate QoS flow.

The service flow may be represented by a QoS flow identifier (QoS flow identifier, QFI), an internet protocol (internet protocol, IP) quintuple, an IP triplet, or an application identifier. For example, UE has a plurality of service flows, including service flows 1 to 3. An application function network element subscribes to network congestion exposure for the service flow 1 and the service flow 2. The service flow 1 needs guaranteed QoS, that is, the session management function network element establishes a corresponding GBR QoS flow for the service flow 1. The service flow 2 does not need guaranteed QoS, that is, the session management function network element establishes a corresponding non-GBR QoS flow for the service flow 2. In this example, the session management function network element sends the first indication information to the user plane function network element only for the service flow 1.

It should be noted that, in all embodiments of this application, an identifier of service flow information on an AF side may be different from an identifier of service flow information on a 5G core (5G core, 5GC) side. For example, the AF may use an internet protocol (internet protocol, IP) quintuple/IP triplet or an application identifier (application identifier, APP ID) to represent a service flow. On the 5GC side, for example, the SMF, a RAN, and the UPF may use a QoS flow identifier (QoS flow identifier, QFI) to represent a service flow; or the SMF and the UPF may use an IP quintuple, an IP triplet, or an APP ID to represent a service flow.

Optionally, the session management function network element receives a network congestion notification indication, and may determine, based on the network congestion notification indication, that the first service flow needs network congestion exposure

Further, the session management function network element determines that the first service flow corresponds to a guaranteed bit rate QoS flow. Specifically, the session management function network element determines, based on a QoS characteristic corresponding to the first service flow, that the first service flow corresponds to the guaranteed bit rate QoS flow. The QoS characteristic may be represented by a 5G QoS identifier (5G QoS identifier, 5QI).

Further, the session management function determines that the first service flow has an alternative QoS requirement (that is, the first service flow has an alternative QoS requirement). Specifically, the session management function network element determines, based on an alternative QoS parameter included in a received PCC rule, that the first service flow has the alternative QoS requirement. It may also be described as that the first service flow has an alternative QoS parameter (that is, the first service flow has an alternative QoS parameter).

Based on the foregoing descriptions, it may be summarized that the session management function network element sends a first indication to the user plane function network element for the first service flow. The first service flow meets at least one of the following characteristics: the first service flow needs network congestion exposure, the first service flow corresponds to a guaranteed bit rate QoS flow, and the first service flow has an alternative QoS parameter or QoS requirement.

In another optional implementation, the session management function network element receives second indication information from the policy control function network element, where the second indication information indicates the session management function network element to send the first indication information to the user plane function network element.

For example, before step 1401, the application function network element sends a QoS creation request to the policy control function network element via a network exposure function network element, where the QoS creation request may include one or more of the following: service flow information, a network congestion notification indication, a QoS requirement, and the like.

Specifically, for related descriptions of the network congestion notification indication and the QoS requirement, refer to related descriptions in step 501.

The policy control function network element determines a PCC rule based on the QoS creation request, and sends the PCC rule to the session management function network element. The PCC rule includes a correspondence between a QoS parameter and a QoS requirement indication, the QoS parameter is determined by the policy control function network element based on a QoS requirement, and the QoS requirement indication is allocated by the application function network element.

Optionally, the QoS parameter may be one or more parameters, for example, at least one of a PDB, a PER, or a GBR.

Optionally, the PCC rule includes a network congestion notification indication, that is, receiving the network congestion notification indication by the session management function network element is receiving the network congestion notification indication included in the PCC rule.

Optionally, the PCC rule includes the second indication information. That is, receiving the second indication information by the session management function network element from the policy control function network element is receiving the second indication information included in the PCC rule. It may be understood that the policy control function network element may send the second indication information to the session management function network element based on a characteristic of a service flow. The characteristic of the service flow is at least one of the following: the service flow needs network congestion exposure, the service flow corresponds to a guaranteed bit rate QoS flow, and the service flow has an alternative QoS requirement.

Optionally, the session management function network element sends a QoS profile to an access network device, where the QoS profile corresponds to the QoS parameter. For example, the QoS profile may include one or more of a PDB, a PER, or a GFBR.

Optionally, the session management function network element may send an N4 session creation or modification request message to the user plane function network element, where the N4 session creation or modification request message includes the first indication information. Optionally, the N4 session creation or modification request message may include an N4 rule (N4 rules), and the N4 rule includes the first indication information.

Optionally, the user plane function network element may send, to the session management function network element, a message responding to the first indication information.

Step 1402: The session management function network element receives, from the user plane function network element, first congestion information corresponding to the first service flow, where the first congestion information includes a first QoS profile indication.

In an optional implementation, when congestion occurs in the access network device, the access network device may determine a QoS profile that can be met by a current resource, and then send, to the user plane function network element, a first QoS profile indication corresponding to the QoS profile.

Optionally, the user plane function network element determines, based on the first indication information, whether a service flow corresponding to the first QoS profile indication is a first service flow. When determining that the service flow is the first service flow, the user plane function network element sends, to the session management function network element, the first congestion information including the first QoS profile indication.

In an example, when determining that the service flow corresponding to the first QoS profile is not the first service flow, the user plane function network element may process corresponding congestion information by using another rule, for example, send a corresponding service flow to the application function network element, or directly discard a corresponding service flow.

Step 1403: The session management function network element determines, based on a correspondence between the QoS profile indication and the QoS requirement indication, a first QoS requirement indication corresponding to the first QoS profile indication.

Step 1404: The session management function network element sends the first QoS requirement indication to the application function network element.

The application function network element may determine, based on the first QoS requirement indication, a QoS requirement that can be met by a resource of the access network device, to perform transmission adjustment, for example, adjust a bit rate.

According to the foregoing communication method, when QNC is exposed via a user plane, the session management function network element indicates the user plane function network element to report a congestion status of the access network device, and then the session management function network element converts congestion of the access network device into a QoS requirement that can be understood by the application function network element. In this way, a QNC notification path can be short, and the application function network element can respond quickly, thereby ensuring user experience. In addition, change of logic of the UPF network element can be avoided, thereby reducing complexity of the network element.

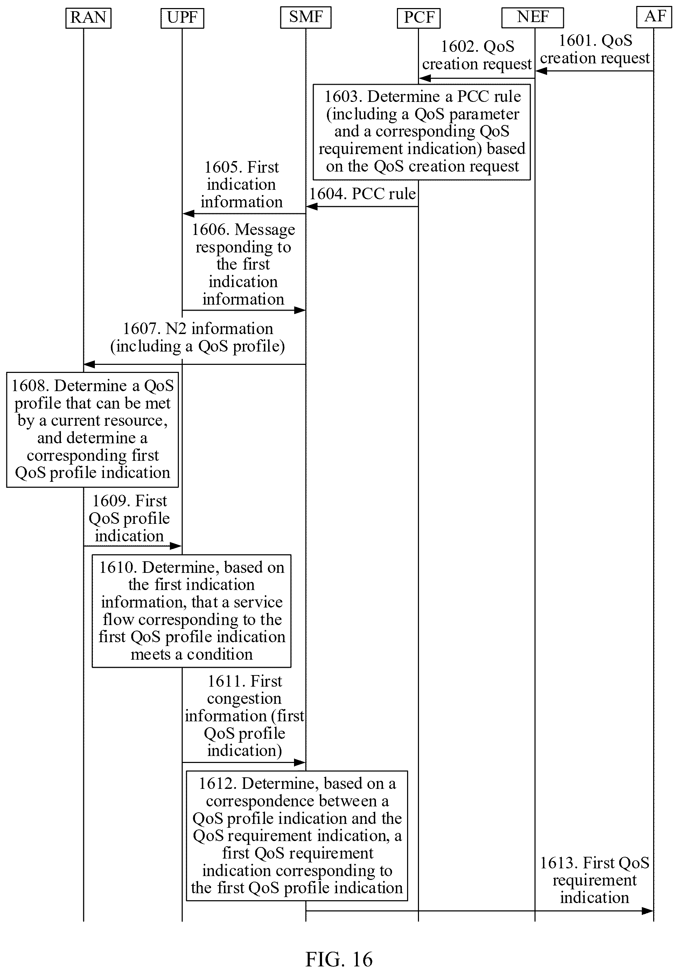

Based on the foregoing descriptions, the following describes, in detail by using specific examples shown in FIG. 15 and FIG. 16, the communication method provided in the embodiment shown in FIG. 14. In the following examples shown in FIG. 15 and FIG. 16, descriptions are provided by using an example in which a session management function network element is an SMF, a policy control function network element is a PCF, an access network device is a RAN, an application function network element is an AF, and a network exposure function network element is an NEF.

FIG. 15 is a diagram of a QNC notification scenario. In this scenario, a QNC subscription process is as follows: An AF sends a QoS requirement and a QoS requirement indication to a PCF via an NEF; the PCF determines a corresponding QoS parameter based on the QoS requirement, and sends a correspondence between the QoS parameter and the QoS requirement indication to an SMF; the SMF sends a QoS profile to a RAN; and the SMF sends an N4 rule to a UPF (which may be understood as sending first indication information). A QNC notification process is as follows: When congestion occurs in the RAN, the RAN determines a first QoS profile indication corresponding to a first QoS profile that can be met by a current resource, and sends the first QoS profile indication to the UPF. The UPF sends, to the SMF when determining that an N4 rule is met, first congestion information including the first QoS profile indication. The SMF determines a first QoS requirement indication corresponding to the first QoS profile indication, and sends the first QoS requirement indication to the AF, so that the AF determines a first QoS requirement corresponding to the first QoS requirement indication, to perform transmission adjustment, for example, adjust a bit rate.

Based on the scenario shown in FIG. 16, FIG. 15 shows an example of a communication method. For example, a specific procedure of the example may include the following steps.

Step 1601 and step 1602: Refer to step 701 and step 702. Details are not described herein again.

Step 1603: A PCF determines a PCC rule based on a QoS creation request, where the PCC rule includes a QoS parameter (AQRequirement) and a corresponding QoS requirement indication (reference to AQRequirement), and the QoS parameter corresponds to a QoS requirement.

Step 1604: The PCF sends the PCC rule to an SMF.

Optionally, the PCC rule may include a network congestion notification indication. The network congestion notification indication may trigger the SMF to send first indication information to a UPF. The first indication information indicates the UPF to report, to the SMF, congestion information corresponding to a first service flow (which may also be referred to as a packet).

Optionally, the PCC rule may include second indication information, and the second indication information indicates the session management function network element to send the first indication information to the user plane function network element. This may also be understood as that the second indication information indicates the SMF to expose the congestion information to the AF. Further, the PCF may include the second indication information in the PCC rule when determining that a service flow meets at least one of the following characteristics: the service flow requires a network congestion notification, the service flow requires guaranteed QoS, and the service flow has an alternative QoS parameter.

Step 1605: The SMF sends the first indication information to the UPF.

Optionally, the SMF sends an N4 session creation/modification request message to the UPF, where the N4 session creation/modification request message includes an N4 rule, and the N4 rule may be understood as the first indication information, or the N4 rule includes the first indication information.

In an optional manner, the SMF may perform step 1605 based on the second indication information.

In another optional manner, the SMF may determine that the first service flow requires direct congestion exposure and the service flow corresponds to a GBR QoS flow, that is, determine, based on the network congestion notification indication, that the first service flow needs direct network congestion exposure and corresponds to a guaranteed bit rate QoS flow, and the SMF performs step 1605.

Step 1606: The UPF sends, to the SMF, a message responding to the first indication information.

Step 1607: The SMF sends N2 information to the RAN, where the N2 information includes a QoS profile (AQProfile).

The SMF determines the QoS profile based on the QoS parameter.

Optionally, the N2 information may further include the network congestion notification indication.

Optionally, the N2 information may further include a QoS parameter indication.

Step 1608: When congestion occurs in the RAN, the RAN determines a QoS profile that can be met by a current resource, and determines a corresponding first QoS profile indication.

Step 1609: The RAN sends the first QoS profile indication to the UPF.

The UPF may be a local UPF, that is, a local session anchor.

Step 1610: The UPF determines, based on the first indication information, that a service flow corresponding to the first QoS profile indication meets a condition. In other words, the UPF determines that the service flow corresponding to the first QoS profile indication is the first service flow.

Step 1611: The UPF sends first congestion information to the SMF, where the first congestion information includes the first QoS profile indication.

It may be understood that if the received service flow does not meet the condition, the UPF may process the service flow based on other N4 rules, for example, send the service flow to the AF or discard the service flow.

Step 1612: The SMF determines, based on a correspondence between a QoS profile indication and the QoS requirement indication, a first QoS requirement indication corresponding to the first QoS profile indication.

Step 1613: The SMF sends the first QoS requirement indication to the AF.

The AF may determine, based on the first QoS requirement indication, a QoS requirement that can be met by a resource of the RAN, to perform transmission adjustment, for example, adjust a bit rate.

In this example, QNC notification is performed from the UPF to the SMF and to the AF, so that a QNC notification path is short, and the AF can respond quickly, thereby ensuring user experience.

It should be noted that a subsequent reporting procedure is described above by using an example in which congestion occurs in the RAN. Optionally, in a process in which the resource of the RAN changes, for example, when congestion occurring in the RAN changes to non-congestion, the RAN determines the QoS profile that can be currently met, and then performs a subsequent reporting procedure. For example, in the embodiments shown in FIG. 5 to FIG. 7, the RAN reports the QoS requirement indication corresponding to the QoS profile.

It should be noted that the AF in this application may also be replaced with an application server (application server, AS). This is not limited in this application.

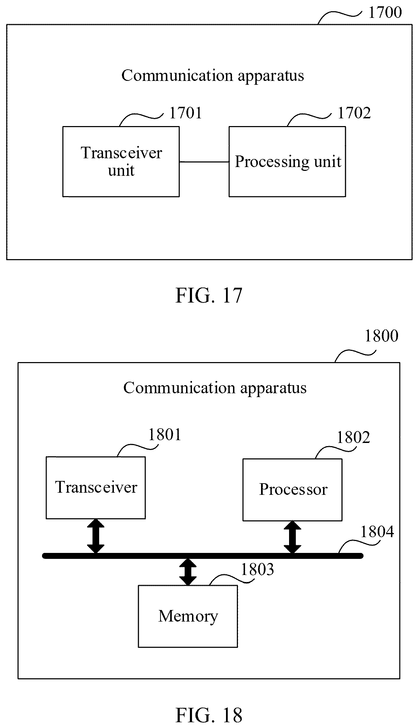

Based on the foregoing embodiments, an embodiment of this application further provides a communication apparatus. Refer to FIG. 17. A communication apparatus 1700 may include a transceiver unit 1701 and a processing unit 1702. The transceiver unit 1701 is configured to receive, by the communication apparatus 1700, a message (information or data) or send a message (information or data), and the processing unit 1702 is configured to: control and manage an action of the communication apparatus 1700. The processing unit 1702 may further control steps performed by the transceiver unit 1701.

For example, the communication apparatus 1700 may be specifically the access network device, the processor in the access network device, the chip, the chip system, the functional module, or the like in the foregoing embodiments; or the communication apparatus 1700 may be specifically the session management function network element, the processor in the session management function network element, the chip, the chip system, the functional module, or the like in the foregoing embodiments; or the communication apparatus 1700 may be specifically the application function network element, the processor in the application function network element, the chip, the chip system, the functional module, or the like in the foregoing embodiments; or the communication apparatus 1700 may be specifically the policy control function network element, the processor in the policy control function network element, the chip, the chip system, the functional module, or the like in the foregoing embodiments.

In an embodiment, when the communication apparatus 1700 is configured to implement functions of the access network device (for example, a RAN) in the embodiments shown in FIG. 5 to FIG. 7,
the transceiver unit 1701 may be configured to receive first information from a session management function network element, where the first information includes a correspondence between a QoS profile and a QoS requirement indication; the processing unit 1702 may be configured to determine a first QoS requirement indication based on the correspondence between the QoS profile and the QoS requirement indication, where the first QoS requirement indication is a QoS requirement indication corresponding to a QoS profile that can be met by a current resource of the access network device; and the transceiver unit 1701 may be further configured to send the first QoS requirement indication to a user plane function network element.

In an optional implementation, the QoS requirement indication is from an application function network element.

In another embodiment, when the communication apparatus 1700 is configured to implement functions of the session management function network element (for example, an SMF) in the embodiments shown in FIG. 5 to FIG. 7,
the transceiver unit 1701 may be configured to: receive a policy and charging control PCC rule from a policy control function network element, where the PCC rule includes a correspondence between a quality of service QoS parameter and a QoS requirement indication; and send first information to an access network device according to the PCC rule, where the first information includes a correspondence between a QoS profile and the QoS requirement indication, and the QoS parameter corresponds to the QoS profile; and the processing unit 1702 may be configured to control the foregoing operations of the transceiver unit 1701.

In an optional implementation, the PCC rule may further include a network congestion notification indication; and the processing unit 1702 may be further configured to determine, based on the network congestion notification indication, to send the QoS requirement indication to the access network device.

In another optional implementation, the PCC rule may further include first indication information, and the first indication information indicates the session management function network element to send the QoS requirement indication to the access network device.

For example, the QoS requirement indication is from an application function network element.

In another embodiment, when the communication apparatus 1700 is configured to implement functions of the session management function network element (for example, an SMF) in the embodiments shown in FIG. 8 to FIG. 10,
the transceiver unit 1701 may be configured to receive a policy and charging control PCC rule from a policy control function network element, where the PCC rule includes a quality of service QoS parameter; the processing unit 1702 may be configured to determine a QoS profile corresponding to the QoS parameter; and the transceiver unit 1701 may be further configured to send, to an application function network element, a QoS profile indication corresponding to the QoS profile, where the QoS profile indication is used by the application function network element to determine a corresponding QoS requirement.

In an optional implementation, the PCC rule may further include first indication information, and the first indication information indicates the session management function network element to send the QoS profile indication corresponding to the QoS profile to the application function network element.

In another optional implementation, the PCC rule may further include a network congestion notification indication; and the processing unit 1702 may be further configured to determine, based on the network congestion notification indication, to send the QoS profile indication corresponding to the QoS profile to the application function network element.

In another embodiment, when the communication apparatus 1700 is configured to implement functions of the application function network element (for example, an AF) in the embodiments shown in FIG. 8 to FIG. 10,
the transceiver unit 1701 may be configured to receive, from a session management function network element, a QoS profile indication corresponding to a QoS profile, where the QoS profile indication is used by the application function network element to determine a corresponding QoS requirement; the processing unit 1702 may be configured to store a correspondence between the QoS profile indication and the QoS requirement; the transceiver unit 1701 may be further configured to receive a first QoS profile indication from a user plane function network element; and the processing unit 1702 may be further configured to determine, based on the correspondence between the QoS profile indication and the QoS requirement, a first QoS requirement corresponding to the first QoS profile indication.

In another embodiment, when the communication apparatus 1700 is configured to implement functions of the policy control function network element (for example, a PCF) in the embodiments shown in FIG. 11 to FIG. 13,
the transceiver unit 1701 may be configured to receive a QoS requirement from an application function network element; the processing unit 1702 may be configured to determine a QoS parameter corresponding to the QoS requirement; and the transceiver unit 1701 may be further configured to send, to the application function network element, a QoS parameter indication corresponding to the QoS parameter, where the QoS parameter indication is used by the application function network element to determine the corresponding QoS requirement.

Optionally, the transceiver unit 1701 may be further configured to send first indication information to a session management function network element, where the first indication information indicates the session management function network element to send the QoS parameter indication to an access network device.

In an example, the transceiver unit 1701 may be further configured to receive a network congestion notification indication from the application function network element; and the processing unit 1702 may be further configured to determine, based on the network congestion notification indication, to send the QoS parameter indication corresponding to the QoS parameter to the application function network element.

In another example, the transceiver unit 1701 may be further configured to receive second indication information from the application function network element, where the second indication information indicates the policy control function network element to send the QoS parameter indication corresponding to the QoS parameter to the application function network element.

For example, the transceiver unit 1701 may be further configured to send the QoS parameter indication to the session management function network element.

In another embodiment, when the communication apparatus 1700 is configured to implement functions of the application function network element (for example, an AF) in the embodiments shown in FIG. 11 to FIG. 13,
the transceiver unit 1701 may be configured to receive, from a policy control function network element, a QoS parameter indication corresponding to a QoS parameter, where the QoS parameter indication is used by the application function network element to determine a corresponding QoS requirement; the processing unit 1702 may be configured to store a correspondence between the QoS parameter indication and the QoS requirement; the transceiver unit 1701 may be further configured to receive a first QoS parameter indication from a user plane function network element; and the processing unit 1702 may be further configured to determine, based on the correspondence between the QoS parameter indication and the QoS requirement, a first QoS requirement corresponding to the first QoS parameter indication.

Optionally, the transceiver unit 1701 may be further configured to send second indication information to the policy control function network element, where the second indication information indicates the policy control function network element to send the QoS parameter indication corresponding to the QoS parameter to the application function network element.

In another embodiment, when the communication apparatus 1700 is configured to implement functions of the session management function network element (for example, an SMF) in the embodiments shown in FIG. 11 to FIG. 13,
the transceiver unit 1701 may be configured to: receive a QoS parameter indication from a policy control function network element; and send the QoS parameter indication to an access network device, where the QoS parameter indication is used by the access network device to determine a QoS parameter indication corresponding to a QoS profile; and the processing unit 1702 may be configured to control the foregoing operations of the transceiver unit 1701.

In an example, the transceiver unit 1701 may be further configured to receive first indication information from the policy control function network element, where the first indication information indicates the session management function network element to send the QoS parameter indication to the access network device.

In another example, the transceiver unit 1701 may be further configured to receive a network congestion notification indication from the policy control function network element; and the processing unit 1702 may be further configured to determine, based on the network congestion notification indication, to send the QoS parameter indication to the access network device.

In another embodiment, when the communication apparatus 1700 is configured to implement functions of the access network device (for example, a RAN) in the embodiments shown in FIG. 11 to FIG. 13,
the transceiver unit 1701 may be configured to receive a QoS parameter indication from a session management function network element, where the QoS parameter indication is used by the access network device to determine a QoS parameter indication corresponding to a QoS profile; the processing unit 1702 may be configured to determine, based on the QoS parameter indication, a first QoS parameter indication corresponding to a first QoS profile; and the transceiver unit 1701 may be further configured to send the first QoS parameter indication to an application function network element via a user plane function network element.

In another embodiment, when the communication apparatus 1700 is configured to implement functions of the session management function network element (for example, an SMF) in the embodiments shown in FIG. 14 to FIG. 16,
the transceiver unit 1701 may be configured to: send first indication information to a user plane function network element, where the first indication information indicates the user plane function network element to report congestion information corresponding to a first service flow to the session management function network element; and receive, from the user plane function network element, first congestion information corresponding to the first service flow, where the first congestion information includes a first QoS profile indication; the processing unit 1702 may be configured to determine, based on a correspondence between a QoS profile indication and a QoS requirement indication, a first QoS requirement indication corresponding to the first QoS profile indication; and the transceiver unit 1701 may be further configured to send the first QoS requirement indication to an application function network element.

In an example, the processing unit 1702 may be further configured to determine that the first service flow needs network congestion exposure and corresponds to a guaranteed bit rate QoS flow. When sending the first indication information to the user plane function network element, the transceiver unit 1701 may be configured to send the first indication information to the user plane function network element based on that the processing unit 1702 determines that the first service flow needs network congestion exposure and corresponds to the guaranteed bit rate QoS flow.

Optionally, the transceiver unit 1701 may be further configured to receive a network congestion notification indication; and the processing unit 1702 may be further configured to determine, based on the network congestion notification indication, that the first service flow needs network congestion exposure and corresponds to the guaranteed bit rate QoS flow.

In another example, the transceiver unit 1701 may be further configured to receive second indication information from a policy control function network element, where the second indication information indicates the session management function network element to send the first indication information to the user plane function network element.

In a possible manner, the QoS requirement indication is from the application function network element.

It should be noted that, in embodiments of this application, division into the units is an example and is merely logical function division, and may be other division in an actual implementation. Functional units in embodiments of this application may be integrated into one processing unit, and each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 18. A communication apparatus 1800 may include a transceiver 1801 and a processor 1802. Optionally, the communication apparatus 1800 may further include a memory 1803. The memory 1803 may be disposed inside the communication apparatus 1800, or may be disposed outside the communication apparatus 1800. The processor 1802 may control the transceiver 1801 to receive and send a message, information, data, or the like. The transceiver may be a transceiver or the like.

Specifically, the processor 1802 may be a central processing unit (central processing unit, CPU), a network processor (network processor, NP), or a combination of a CPU and an NP. The processor 1802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1801, the processor 1802, and the memory 1803 are connected to each other. Optionally, the transceiver 1801, the processor 1802, and the memory 1803 are connected to each other through a bus 1804. The bus 1804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line represents the bus in FIG. 18, but this does not mean that there is only one bus or only one type of bus.

In an optional implementation, the memory 1803 is configured to store a program and the like. Specifically, the program may include program code, and the program code includes computer operation instructions. The memory 1803 may include a RAM, and may further include a non-volatile memory (non-volatile memory), for example, one or more disk memories. The processor 1802 executes the application program stored in the memory 1803 to implement the foregoing functions, so as to implement the functions of the communication apparatus 1800.

For example, the communication apparatus 1800 may be specifically the access network device in the foregoing embodiment, or may be the session management function network element in the foregoing embodiment, or may be the application function network element in the foregoing embodiment, or may be the policy control function network element in the foregoing embodiment.

In an embodiment, when the communication apparatus 1800 implements a function of the access network device (for example, a RAN) in the foregoing embodiment, the transceiver 1801 may implement receiving and sending operations performed by the access network device in the foregoing embodiment, and the processor 1802 may implement an operation other than the receiving and sending operations performed by the access network device in the foregoing embodiment. For detailed related descriptions, refer to related descriptions in the foregoing embodiments. Details are not described herein again.

In an embodiment, when the communication apparatus 1800 implements a function of the session management function network element (for example, an SMF) in the foregoing embodiment, the transceiver 1801 may implement a receiving and sending operation performed by the session management function network element in the foregoing embodiment, and the processor 1802 may implement an operation other than the receiving and sending operation performed by the session management function network element in the foregoing embodiment. For detailed related descriptions, refer to related descriptions in the foregoing embodiments. Details are not described herein again.

In an embodiment, when the communication apparatus 1800 implements a function of the application function network element (for example, an AF) in the foregoing embodiment, the transceiver 1801 may implement a receiving and sending operation performed by the application function network element in the foregoing embodiment, and the processor 1802 may implement an operation other than the receiving and sending operation performed by the application function network element in the foregoing embodiment. For detailed related descriptions, refer to related descriptions in the foregoing embodiments. Details are not described herein again.

In an embodiment, when the communication apparatus 1800 implements a function of the policy control function network element (for example, a PCF) in the foregoing embodiment, the transceiver 1801 may implement a receiving and sending operation performed by the policy control function network element in the foregoing embodiment, and the processor 1802 may implement an operation other than the receiving and sending operation performed by the policy control function network element in the foregoing embodiment. For detailed related descriptions, refer to related descriptions in the foregoing embodiments. Details are not described herein again.

Based on the foregoing embodiments, an embodiment of this application provides a communication system. The communication system may include the access network device, the session management function network element, the application function network element, the policy control function network element, and the like in the foregoing embodiments.

An embodiment of this application further provides a computer-readable storage medium. The computer-readable storage medium is configured to store a computer program. When the computer program is executed by a computer, the computer may implement a function of the access network device (for example, a RAN) in the foregoing embodiments, or implement a function of the session management function network element (for example, an SMF) in the foregoing embodiments, or implement a function of the application function network element (for example, an AF) in the foregoing embodiments, or implement a function of the policy control function network element (for example, a PCF) in the foregoing embodiments, or the like.

An embodiment of this application further provides a computer program product. The computer program product is configured to store a computer program. When the computer program is executed by a computer, the computer may implement a function of the access network device (for example, a RAN) in the foregoing embodiments, or implement a function of the session management function network element (for example, an SMF) in the foregoing embodiments, or implement a function of the application function network element (for example, an AF) in the foregoing embodiments, or implement a function of the policy control function network element (for example, a PCF) in the foregoing embodiments, or the like.

An embodiment of this application further provides a chip, including a processor. The processor is coupled to a memory, and is configured to invoke a program in the memory, so that the chip implements a function of the access network device (for example, a RAN) in the foregoing embodiments, or implements a function of the session management function network element (for example, an SMF) in the foregoing embodiments, or implements a function of the application function network element (for example, an AF) in the foregoing embodiments, or implements a function of the policy control function network element (for example, a PCF) in the foregoing embodiments, or the like.

An embodiment of this application further provides a chip. The chip is coupled to a memory. The chip is configured to implement a function of the access network device (for example, a RAN) in the foregoing embodiments, or implement a function of the session management function network element (for example, an SMF) in the foregoing embodiments, or implement a function of the application function network element (for example, an AF) in the foregoing embodiments, or implement a function of the policy control function network element (for example, a PCF) in the foregoing embodiments, or the like.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specified function in one or more procedures in the flowcharts and/or in one or more blocks in the block diagrams.

These computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by an access network device, first information from a session management function network element, wherein the first information comprises a correspondence between a QoS profile and a QoS requirement indication;
determining, by the access network device, a first QoS requirement indication based on the correspondence between the QoS profile and the QoS requirement indication, wherein the first QoS requirement indication is a QoS requirement indication corresponding to a QoS profile that can be met by a current resource of the access network device; and
sending, by the access network device, the first QoS requirement indication to a user plane function network element.

2. The method according to claim 1, wherein the QoS requirement indication is from an application function network element.

3. A communication method, comprising:
receiving, by a session management function network element, a policy and charging control PCC rule from a policy control function network element, wherein the PCC rule comprises a correspondence between a quality of service QoS parameter and a QoS requirement indication; and
sending, by the session management function network element, first information to an access network device according to the PCC rule, wherein the first information comprises a correspondence between a QoS profile and the QoS requirement indication, and the QoS parameter corresponds to the QoS profile.

4. The method according to claim 3, wherein the PCC rule further comprises a network congestion notification indication; and
the method further comprises:
determining, by the session management function network element based on the network congestion notification indication, to send the QoS requirement indication to the access network device.

5. The method according to claim 3, wherein the PCC rule further comprises first indication information, and the first indication information indicates the session management function network element to send the QoS requirement indication to the access network device.

6. The method according to any one of claims 3 to 5, wherein the QoS requirement indication is from an application function network element.

7. A communication method, comprising:
receiving, by a session management function network element, a policy and charging control PCC rule from a policy control function network element, wherein the PCC rule comprises a quality of service QoS parameter;
determining, by the session management function network element, a QoS profile corresponding to the QoS parameter; and
sending, by the session management function network element to an application function network element, a QoS profile indication corresponding to the QoS profile, wherein the QoS profile indication is used by the application function network element to determine a corresponding QoS requirement.

8. The method according to claim 7, wherein the PCC rule further comprises first indication information, and the first indication information indicates the session management function network element to send the QoS profile indication corresponding to the QoS profile to the application function network element.

9. The method according to claim 7, wherein the PCC rule further comprises a network congestion notification indication; and
the method further comprises:
determining, by the session management function network element based on the network congestion notification indication, to send the QoS profile indication corresponding to the QoS profile to the application function network element.

10. A communication method, comprising:
receiving, by an application function network element from a session management function network element, a QoS profile indication corresponding to a QoS profile, wherein the QoS profile indication is used by the application function network element to determine a corresponding QoS requirement;
storing, by the application function network element, a correspondence between the QoS profile indication and the QoS requirement;
receiving, by the application function network element, a first QoS profile indication from a user plane function network element; and
determining, by the user function network element based on the correspondence between the QoS profile indication and the QoS requirement, a first QoS requirement corresponding to the first QoS profile indication.

11. A communication apparatus, comprising:
a transceiver unit, configured to receive first information from a session management function network element, wherein the first information comprises a correspondence between a QoS profile and a QoS requirement indication; and
a processing unit, configured to determine a first QoS requirement indication based on the correspondence between the QoS profile and the QoS requirement indication, wherein the first QoS requirement indication is a QoS requirement indication corresponding to a QoS profile that can be met by a current resource of the access network device, wherein
the transceiver unit is further configured to send the first QoS requirement indication to a user plane function network element.

12. The apparatus according to claim 11, wherein the QoS requirement indication is from an application function network element.

13. A communication apparatus, comprising:
a transceiver unit, configured to receive a policy and charging control PCC rule from a policy control function network element, wherein the PCC rule comprises a correspondence between a quality of service QoS parameter and a QoS requirement indication; and
a processing unit, configured to send first information to an access network device according to the PCC rule, wherein the first information comprises a correspondence between a QoS profile and the QoS requirement indication, and the QoS parameter corresponds to the QoS profile.

14. The apparatus according to claim 13, wherein the PCC rule further comprises a network congestion notification indication; and
the processing unit is further configured to determine, based on the network congestion notification indication, to send the QoS requirement indication to the access network device.

15. The apparatus according to claim 13, wherein the PCC rule further comprises first indication information, and the first indication information indicates the session management function network element to send the QoS requirement indication to the access network device.

16. The apparatus according to any one of claims 13 to 15, wherein the QoS requirement indication is from an application function network element.

17. A communication apparatus, comprising:
a transceiver unit, configured to receive a policy and charging control PCC rule from a policy control function network element, wherein the PCC rule comprises a quality of service QoS parameter; and
a processing unit, configured to determine a QoS profile corresponding to the QoS parameter, wherein
the transceiver unit is further configured to send, to an application function network element, a QoS profile indication corresponding to the QoS profile, wherein the QoS profile indication is used by the application function network element to determine a corresponding QoS requirement.

18. The apparatus according to claim 17, wherein the PCC rule further comprises first indication information, and the first indication information indicates the session management function network element to send the QoS profile indication corresponding to the QoS profile to the application function network element.

19. The apparatus according to claim 17, wherein the PCC rule further comprises a network congestion notification indication; and
the processing unit is further configured to determine, based on the network congestion notification indication, to send the QoS profile indication corresponding to the QoS profile to the application function network element.

20. A communication apparatus, comprising:
a transceiver unit, configured to receive, from a session management function network element, a QoS profile indication corresponding to a QoS profile, wherein the QoS profile indication is used by the application function network element to determine a corresponding QoS requirement; and
a processing unit, configured to store a correspondence between the QoS profile indication and a QoS requirement, wherein
the transceiver unit is further configured to receive a first QoS profile indication from a user plane function network element; and
the processing unit is further configured to determine, based on the correspondence between the QoS profile indication and the QoS requirement, a first QoS requirement corresponding to the first QoS profile indication.

21. A communication apparatus, comprising a memory, a processor, and a transceiver, wherein
the memory is configured to store computer instructions;
the transceiver is configured to: receive and/or send information or data; and
the processor is coupled to the memory, and is configured to invoke the computer instructions in the memory, to perform the method according to claim 1 or 2 via the transceiver.

22. A communication apparatus, comprising a memory, a processor, and a transceiver, wherein
the memory is configured to store computer instructions;
the transceiver is configured to: receive and/or send information or data; and
the processor is coupled to the memory, and is configured to invoke the computer instructions in the memory, to perform the method according to any one of claims 3 to 6 via the transceiver.

23. A communication apparatus, comprising a memory, a processor, and a transceiver, wherein
the memory is configured to store computer instructions;
the transceiver is configured to: receive and/or send information or data; and
the processor is coupled to the memory, and is configured to invoke the computer instructions in the memory, to perform the method according to any one of claims 7 to 9 via the transceiver.

24. A communication apparatus, comprising a memory, a processor, and a transceiver, wherein
the memory is configured to store computer instructions;
the transceiver is configured to: receive and/or send information or data; and
the processor is coupled to the memory, and is configured to invoke the computer instructions in the memory, to perform the method according to claim 10 via the transceiver.

25. A communication method, comprising:
receiving, by a session management function network element, a policy and charging control PCC rule from a policy control function network element, wherein the PCC rule comprises a correspondence between a quality of service QoS parameter and a QoS requirement indication;
sending, by the session management function network element, first information to an access network device according to the PCC rule, wherein the first information comprises a correspondence between a QoS profile and the QoS requirement indication, and the QoS parameter corresponds to the QoS profile;
receiving, by the access network device, the first information from the session management function network element;
determining, by the access network device, a first QoS requirement indication based on the correspondence between the QoS profile and the QoS requirement indication, wherein the first QoS requirement indication is a QoS requirement indication corresponding to a QoS profile that can be met by a current resource of the access network device; and
sending, by the access network device, the first QoS requirement indication to a user plane function network element.

26. The method according to claim 25, wherein the PCC rule further comprises a network congestion notification indication; and
the method further comprises:
determining, by the session management function network element based on the network congestion notification indication, to send the QoS requirement indication to the access network device.

27. The method according to claim 25, wherein the PCC rule further comprises first indication information, and the first indication information indicates the session management function network element to send the QoS requirement indication to the access network device.

28. The method according to any one of claims 25 to 27, wherein the QoS requirement indication is from an application function network element.

29. A computer-readable storage medium, wherein the computer-readable storage medium stores computer-executable instructions, and the computer-executable instructions are invoked by a computer, to perform the method according to claim 1 or 2, perform the method according to any one of claims 3 to 6, perform the method according to any one of claims 7 to 9, or perform the method according to claim 10.

30. A computer program product, comprising instructions, wherein when the instructions are run on a computer, the method according to claim 1 or 2, the method according to any one of claims 3 to 6, the method according to any one of claims 7 to 9, or the method according to claim 10 is performed.

31. A chip, wherein the chip is coupled to a memory, and is configured to: read and execute program instructions stored in the memory, to implement the method according to claim 1 or 2, implement the method according to any one of claims 3 to 6, implement the method according to any one of claims 7 to 9, or implement the method according to claim 10.
